# EUROPÄISCHE PATENTSCHRIFT

(11) **EP 3 463 827 B1**
(45) Veröffentlichungstag und Bekanntmachung des Hinweises auf die Patenterteilung: **29.07.2020**
(21) Anmeldenummer: 17724037.1
(22) Anmeldetag: 17.05.2017
(51) Int. Cl.: B29C 70/24, B29C 70/02, B32B 5/12, B32B 7/00, B29C 65/00, B32B 27/06, B29D 99/00, E04C 2/24

(54) **FASERVERSTÄRKTE SCHAUMSTOFFE**
FIBRE-REINFORCED FOAMS
MOUSSE RENFORCÉE DE FIBRES

(30) Priorität: 25.05.2016 EP 16171419
(43) Veröffentlichungstag der Anmeldung: 10.04.2019
(73) Patentinhaber: BASF SE, 67056 Ludwigshafen (DE)
(72) Erfinder: STEIN, Robert, 67056 Ludwigshafen (DE); RUCKDAESCHEL, Holger, 67056 Ludwigshafen (DE); ARBTER, Rene, 67056 Ludwigshafen (DE); DIEHLMANN, Tim, 67056 Ludwigshafen (DE); DAUN, Gregor, 67056 Ludwigshafen (DE); MARTIN, Marc Claude, 49448 Lemfoerde (DE)
(74) Vertreter: BASF IP Association
(86) Internationale Anmeldenummer: PCT/EP2017/061871
(87) Internationale Veröffentlichungsnummer: WO 2017/202669

(56) Entgegenhaltungen:
- EP-A2- 0 873 862
- DE-A1-102005 024 408
- US-A1- 2010 255 251
- US-A1- 2010 266 833

## Beschreibung

Die vorliegende Erfindung betrifft einen Formkörper gemäss Anspruch 1, der einen Schaumstoff und mindestens eine Faser (F) umfasst. Die Faser (F) weist einen ersten Teil (FT1), einen zweiten Teil (FT2) und einen dritten Teil (FT3) auf. Der dritte Teil (FT3) der Faser (F) verbindet den ersten Teil (FT1) und den zweiten Teil (FT2) der Faser (F) und ist auf einer zweiten Seite des Schaumstoffs angeordnet. Ein erster Bereich (FB11) des ersten Teils (FT1) der Faser (F) und ein erster Bereich (FB12) des zweiten Teils (FT2) der Faser (F) befinden sich innerhalb des Formkörpers und berühren sich nicht. Ein zweiter Bereich (FB21) des ersten Teils (FT1) der Faser (F) und ein zweiter Bereich (FB22) des zweiten Teils (FT2) der Faser (F) ragen aus einer ersten Seite des Schaumstoffs heraus. Die vorliegende Erfindung betrifft außerdem ein Verfahren zur Herstellung der erfindungsgemäßen Formkörper gemäss Anspruch 7 sowie ein Paneel, das den erfindungsgemäßen Formkörper und mindestens eine Schicht (S1) enthält, sowie ein Verfahren zur Herstellung des Paneels. Darüber hinaus betrifft die vorliegende Erfindung die Verwendung des Formkörpers beziehungsweise des Paneels, beispielsweise als Rotorblatt in Windenergieanlagen, gemäss Anspruch 13.

WO 2006/125561 betrifft ein Verfahren zur Herstellung von verstärkten zellulären Materialen. In einem ersten Verfahrensschritt wird in dem zellulären Material zunächst mindestens ein Loch erzeugt, das sich von einer ersten Oberfläche zu einer zweiten Oberfläche des zellulären Materials erstreckt. Auf der zweiten Oberfläche des zellulären Materials wird mindestens ein Faserbündel bereitgestellt und dieses Faserbündel dann mit einer Nadel, die von der ersten Oberfläche des zellulären Materials durch das Loch zur zweiten Oberfläche des zellulären Materials geführt wird, durch das Loch auf die erste Seite des zellulären Materials gezogen. Nach den Verfahrensschritten befindet sich das Faserbündel teilweise innerhalb des zellulären Materials und füllt das entsprechende Loch aus, teilweise ragt das Faserbündel aus den jeweiligen Seiten des zellulären Material heraus.

Durch das in WO 2006/125561 beschriebene Verfahren können sandwichartige Komponenten hergestellt werden, die einen Kern aus dem zellulären Material sowie mindestens ein Faserbündel umfassen. Auf die Oberflächen dieses Kerns können Harzschichten und faserverstärkte Harzschichten aufgebracht werden, um die Sandwichkomponente herzustellen. Als zelluläres Material sind beispielsweise Polyvinylchloride oder Polyurethane beschrieben, als Faserbündel Kohlenstofffasern, Nylonfasern, Glasfasern und Polyesterfasern. Die sandwichartigen Komponenten gemäß WO 2006/125561 eignen sich zur Verwendung im Flugzeugbau.

WO 2006/125561 offenbart nicht, dass die im Formkörper enthaltene Faser einen ersten Teil, einen zweiten Teil und einen dritten Teil aufweist, wobei sich der erste Bereich des ersten Teils und der erste Bereich des zweiten Teils nicht berühren und der dritte Teil den ersten Teil und den zweiten Teil der Faser verbindet.

WO 2012/138445 beschreibt ebenfalls ein Verfahren zur Herstellung von Kompositmaterialien, wobei eine Vielzahl von länglichen Streifen aus einem zellulären Material mit einer niedrigen Dichte eingesetzt wird. Zwischen die jeweiligen Streifen wird eine doppellagige Fasermatte eingebracht. Unter Verwendung von Harz bewirkt diese ein Verkleben der einzelnen Streifen unter Ausbildung der Kompositmaterialien. Das zelluläre Material ist ausgewählt aus Balsaholz, elastischen Schäumen oder faserverstärkten Kompositschäumen. Bei den doppellagigen Fasermatten handelt es sich beispielsweise um poröse Glasfasermatten. Als Kleber wird Harz verwendet, das beispielsweise ein Polyester, ein Epoxy- oder ein phenolisches Harz sein kann oder ein durch Wärme aktivierter Thermoplast, beispielsweise Polypropylen oder Polyethylenterephthalat (PET). WO 2012/138445 offenbart nicht, dass einzelne Fasern oder Faserbündel in das zelluläre Material eingebracht werden können. Stattdessen werden ausschließlich Fasermatten eingesetzt, die als Verbindungsglied im Rahmen einer Verklebung der einzelnen Streifen mittels Harz unter Erhalt des Kompositkernpaneels darstellen.

WO 2011/012587 betrifft ebenfalls ein Verfahren zur Herstellung eines Kernmaterials, das eine Faser enthält, zur Herstellung von Paneelen. Das Kernmaterial wird hergestellt, indem auf einen so genannten "Kuchen" aus Leichtmaterial auf eine Oberfläche Fasern aufgelegt werden und mit Hilfe einer Nadel teilweise oder vollständig in diesen "Kuchen" eingebracht werden. Das Einbringen der Fasern erfolgt nach einem sogenannten "Tufting-Verfahren". Der "Kuchen" kann aus Polyurethanschäumen, Polyesterschäumen, Polyethylenterephthalatschäumen, Polyvinylchloridschäumen oder einem phenolischen Schaum, insbesondere aus einem Polyurethanschaum, ausgebildet sein. Als Fasern können jegliche Arten von einfachen oder mehrfachen Fäden sowie sonstige Garnen verwendet werden.

Die so hergestellten Kernmaterialien können Bestandteil eines Paneels sein, wobei der Kern dann einseitig oder zweiseitig von einer Harzmatrix oder Kombinationen aus Harzmatrizes mit Fasern in einer sandwichartigen Ausgestaltung umgeben ist. WO 2011/012587 beschreibt allerdings nicht, dass die Faser einen ersten Teil, einen zweiten Teil und einen dritten Teil aufweist, wobei der dritte Teil den ersten Teil und den zweiten Teil der Faser verbindet und sich der erste Teil mit einem ersten Bereich und der zweite Teil mit einem ersten Bereich innerhalb des Formkörpers befindet und von dem Schaumstoff umschlossen ist.

Die US 6,187,411 beschreibt Kompositsandwichpaneele und ein Verfahren zu deren Herstellung. Die Kompositsandwichpaneele umfassen ein Kernmaterial, das faserverstärkt ist. Das Kernmaterial ist ein geschlossenzelliger Schaumstoff wie beispielsweise Polyurethan, Phenol, Isocyanat oder ähnliche. Die Fasern werden so in den Kern eingebracht, dass sie auf einer Seite Schlaufen bilden. Diese Schlaufen werden durch einen Unterfaden fixiert. Die Fasern sind daher als Kettstich oder Steppstich in das Kernmaterial eingebracht.

Die US 6,187,411 beschreibt nicht, dass die Faser mit einer Nadel von der zweiten Seite zur ersten Seite des Kernmaterials gezogen wird. Stattdessen beschreibt sie, dass eine Faser von der ersten Seite zur zweiten Seite mit einer Nadel hindurchgeschoben wird.

Ähnliche Verfahren und Materialien wie die US 6,187,411 beschreiben die US 5,624,622 und US 4,196,251. Auch bei diesen Verfahren wird eine Schlaufe der Faser erst auf einer Seite eines Kernmaterials gebildet und diese Schlaufe anschließend durch einen Unterfaden fixiert. Auch bei den in der US 5,624,622 und der US 4,196,251 beschriebenen Verfahren wird also ein Kettstich oder ein Steppstich eingesetzt.

Die US 2010/0266833 beschreibt faserverstärkte Kernpaneele und ein Verfahren zu deren Herstellung. Die faserverstärkten Kernpaneele umfassen ein faserverstärktes zelluläres Material, Harz sowie faserförmige und nicht faserförmige äußere Schichten. Es können Fasern in den Kernpaneelen enthalten sein, die durch ein Tufting-Verfahren eingebracht werden. Dabei werden Rovings durch Nadeln von einer ersten Seite beim Durchstechen des zellulären Materials eingebracht. Die US 2010/0266833 beschreibt also nicht, dass die Faser mit einer Nadel von der zweiten Seite zur ersten Seite des Kernmaterials gezogen wird, sondern beschreibt stattdessen, dass eine Faser von der ersten Seite zur zweiten Seite mit einer Nadel hindurchgeschoben wird.

Die US 2010/0255251 beschreibt ein faserverstärktes Kompositpaneel, das zwei faserförmige Oberflächen und ein Kernmaterial umfasst. Bei dem Kompositpaneel sind Fasern der Oberflächenmaterialien in den Kern mittels *needlepunching* eingedrückt. Auch bei dem in der US 2010/0255251 beschriebenen Verfahren wird also nicht die Faser mit einer Nadel von der zweiten Seite zur ersten Seite des Kernmaterials gezogen, stattdessen wird eine Faser von der ersten Seite zur zweiten Seite mit einer Nadel hindurchgeschoben.

Bei den Verfahren gemäß US 2010/0266833 und US 2010/0255251 handelt es sich jeweils um Tufting-Verfahren. Nachteilig bei diesen ist, dass die Fasern teilweise unvollständig im Schaumstoff verbleiben und teilweise durch die Nadeln herausgezogen werden und außerdem die Fasern brechen. Des Weiteren ist die Fixierung der Fasern in dem Schaumstoff nur unzureichend.

Die der vorliegenden Erfindung zugrundeliegende Aufgabe besteht daher in der Bereitstellung von neuen Formkörpern.

Gelöst wird diese Aufgabe durch einen Formkörper, umfassend einen Schaumstoff, der eine erste Seite und eine zweite Seite aufweist, und mindestens eine Faser (F), die einen ersten Teil (FT1), einen zweiten Teil (FT2) und einen dritten Teil (FT3) aufweist, wobei
- sich ein erster Bereich (FB11) des ersten Teils (FT1) der Faser (F) innerhalb des Formkörpers befindet und von dem Schaumstoff umschlossen ist und ein zweiter Bereich (FB21) des ersten Teils (FT1) der Faser (F) aus der ersten Seite des Schaumstoffs herausragt, und
- sich ein erster Bereich (FB12) des zweiten Teils (FT2) der Faser (F) innerhalb des Formkörpers befindet und von dem Schaumstoff umschlossen ist und ein zweiter Bereich (FB22) des zweiten Teils (FT2) der Faser (F) aus der ersten Seite des Schaumstoffs herausragt und
- der dritte Teil (FT3) der Faser (F) den ersten Teil (FT1) und den zweiten Teil (FT2) der Faser (F) verbindet und auf der zweiten Seite des Schaumstoffs angeordnet ist, und
- der erste Bereich (FB11) des ersten Teils (FT1) der Faser (F) und der erste Bereich (FB12) des zweiten Teils (FT2) der Faser (F) sich nicht berühren,
wobei der Formkörper erhältlich ist nach einem Verfahren umfassend die folgenden Schritte a) bis k):
a) Bereitstellen des Schaumstoffs,
b) Bereitstellen der Faser (F) auf der zweiten Seite des Schaumstoffs,
c) Erzeugen von einem ersten Loch je Faser (F) in dem Schaumstoff, wobei sich das erste Loch von der ersten Seite zur zweiten Seite des Schaumstoffs erstreckt,
d) Erzeugen von einem zweiten Loch je Faser (F) in dem Schaumstoff, wobei sich das zweite Loch von der ersten Seite zur zweiten Seite des Schaumstoffs erstreckt,
e) Durchführen einer Nadel von der ersten Seite des Schaumstoffs durch das erste Loch zur zweiten Seite des Schaumstoffs,
f) Befestigen eines ersten Teils (FT1) der Faser (F) an der Nadel auf der zweiten Seite des Schaumstoffs,
g) Rückführen der Nadel zusammen mit dem ersten Teil (FT1) der Faser (F) durch das erste Loch zur ersten Seite des Schaumstoffs,
h) Durchführen einer Nadel von der ersten Seite des Schaumstoffs durch das zweite Loch zur zweiten Seite des Schaumstoffs,
i) Befestigen des zweiten Teils (FT2) der Faser (F) an der Nadel auf der zweiten Seite des Schaumstoffs,
j) Rückführen der Nadel zusammen mit dem zweiten Teil (FT2) der Faser (F) durch das zweite Loch zur ersten Seite des Schaumstoffs und
k) Erhalt des Formkörpers.

Der erfindungsgemäße Formkörper ermöglicht in vorteilhafter Weise eine nachträgliche Konfektionierung, insbesondere auch durch spanende Verfahren, wobei nur sehr wenige oder gar keine Fasern aus dem Formkörper ausgezogen werden. Die Fasern sind in den erfindungsgemäßen Formkörper also besonders fest eingebracht, einerseits durch die Verbindung des ersten Teils (FT1) der Faser (F) und des zweiten Teils (FT2) der Faser (F) über den dritten Teil (FT3) der Faser (F), andererseits durch die Herstellung des Formkörpers. Es werden daher besonders hohe Auszugswiderstände für die Faser (F) in dem Formkörper erhalten.

Da in einer bevorzugten Ausführungsform der dritte Teil (FT3) der Faser (F) parallel zur zweiten Seite des Formkörpers ausgerichtet ist und mit dieser in Kontakt steht, wird im erfindungsgemäßen Formkörper eine ebene Fläche erhalten, die eine exakte Bezugskante für weitere Bearbeitungsschritte darstellt. Dies gewährleistet eine hohe Maßgenauigkeit bei der weiteren Konfektionierung des Formkörpers. Zudem wird durch diese bevorzugt ebene Fläche die Drapierbarkeit der erfindungsgemäßen Formkörper verbessert und die Eigenstabilität bei der Konfektionierung (beispielsweise beim Einbringen von Schlitzen oder Schäftungen in den Formkörper) erhöht sich, was ebenfalls das Handling der erfindungsgemäßen Formkörper verbessert.

Die erfindungsgemäßen Formkörper zeichnen sich außerdem in vorteilhafter Weise durch eine geringe Harzaufnahme bei gleichzeitig guter Grenzflächenanbindung aus. Dieser Effekt ist insbesondere dann von Bedeutung, wenn der erfindungsgemäße Formkörper zu den erfindungsgemäßen Paneelen weiterverarbeitet wird.

Eine weitere Verbesserung der Anbindung bei gleichzeitig reduzierter Harzaufnahme wird erfindungsgemäß durch die Faserverstärkung der Schaumstoffe in den erfindungsgemäßen Formkörpern bzw. den daraus resultierenden Paneelen ermöglicht. Erfindungsgemäß kann die Faser (F) (einzeln oder vorzugsweise als Faserbündel) in vorteilhafter Weise zunächst trocken und durch mechanische Prozesse in den Schaumstoff eingebracht werden. Die Faser (F) bzw. das Faserbündel weist an den jeweiligen Schaumstoffoberflächen einen Überstand auf (zweiter Bereich (FB21), zweiter Bereich (FB22) und dritter Teil (FT3) der Faser (F)) und ermöglichen damit eine verbesserte Anbindung bzw. eine direkte Verbindung mit den entsprechenden Decklagen im erfindungsgemäßen Paneel. Dies ist insbesondere dann der Fall, wenn als Decklage erfindungsgemäß mindestens eine weitere Schicht (S1) unter Ausbildung des Paneels auf den erfindungsgemäßen Formkörper aufgebracht wird. Vorzugsweise werden zwei Schichten (S1), die gleich oder verschieden sein können, aufgebracht. Besonders bevorzugt werden zwei gleiche Schichten (S1), insbesondere zwei gleiche faserverstärkte Harzschichten, auf einander gegenüberliegenden Seiten des erfindungsgemäßen Formkörpers unter Ausbildung des erfindungsgemäßen Paneels aufgebracht. Solche Paneele werden auch als "Sandwich-Material" bezeichnet, wobei der erfindungsgemäße Formkörper auch als "Kernmaterial" bezeichnet werden kann.

Die erfindungsgemäßen Paneele zeichnen sich daher durch eine geringe Harzaufnahme in Verbindung mit einer guten Schälfestigkeit sowie einer guten Schubsteifigkeit und einem hohen Schubmodul aus. Weiterhin sind hohe Festigkeits- und Steifigkeitseigenschaften gezielt durch die Wahl der Fasertypen, deren Anteil und Anordnung einstellbar. Der Effekt einer geringen Harzaufnahme ist deswegen von Bedeutung, weil beim Einsatz von solchen Paneelen (Sandwich-Materialien) häufig das Ziel besteht, dass die strukturellen Eigenschaften bei möglichst geringem Gewicht erhöht werden sollen. Beim Einsatz von beispielsweise faserverstärkten Decklagen trägt neben den eigentlichen Decklagen und dem Formkörper die Harzaufnahme des Formkörpers zum Gesamtgewicht bei. Durch die erfindungsgemäßen Formkörper bzw. die erfindungsgemäßen Paneelen kann die Harzaufnahme jedoch verringert werden, wodurch Gewicht sowie Kosten eingespart werden können.

Weitere Verbesserungen/Vorteile können dadurch erzielt werden, dass der erste Teil (FT1) der Faser (F) und/oder der zweite Teil (FT2) der Faser (F) jeweils unabhängig voneinander in einem Winkel α von 0 bis 60°, vorzugsweise von 0 bis 50°, mehr bevorzugt von 0 bis 15° oder von 10 bis 70°, insbesondere von 30 bis 60°, mehr bevorzugt von 30 bis 50°, noch mehr bevorzugt von 30 bis 45°, insbesondere von 45 °, relativ zur Dickenrichtung (d) des Formkörpers in den Schaumstoff eingebracht sind. Generell ist das Einbringen in einem Winkel α von 0° bis < 90° technisch durchführbar.

Zusätzliche Verbesserungen/Vorteile können erzielt werden, wenn die Fasern (F) nicht nur parallel zueinander in den Schaumstoff eingebracht werden, sondern wenn weitere Fasern (F) in einem Winkel β zueinander, der vorzugsweise im Bereich von > 0 bis 180° liegt, eingebracht werden. Dadurch wird zusätzlich eine Verbesserung der mechanischen Eigenschaften des Formkörpers erzielt.

Ebenso ist es von Vorteil, wenn in den erfindungsgemäßen Paneelen die Harz-(Deck-)Schicht durch ein Flüssiginjektionsverfahren oder Flüssiginfusionsverfahren aufgebracht wird, bei dem die Fasern während der Verarbeitung in Harz getränkt und die mechanischen Eigenschaften verbessert werden können. Zudem können dadurch Kosten eingespart werden.

Nachfolgend wird die vorliegende Erfindung weiter erläutert.

Erfindungsgemäß umfasst der Formkörper einen Schaumstoff und mindestens eine Faser (F). Der Schaumstoff weist eine erste Seite und eine zweite Seite auf. Bevorzugt liegt die erste Seite des Schaumstoffs der zweiten Seite des Schaumstoffs gegenüber.

Der Schaumstoff kann auf Basis aller dem Fachmann bekannten Polymere sein.

Beispielsweise ist der Schaumstoff auf Basis von mindestens einem Polymer, das ausgewählt ist aus Polystyrol, Polyester, Polyphenylenoxid, einem aus Phenylenoxid hergestellten Copolymer, einem aus Styrol hergestellten Copolymer, Polyarylethersulfon, Polyphenylensulfid, Polyaryletherketon, Polypropylen, Polyethylen, Polyamid, Polyamidimid, Polyetherimid, Polycarbonat, Polyacrylat, Polymilchsäure, Polyvinylchlorid, Polyurethan oder einem Gemisch davon.

Bevorzugt ist der Schaumstoff auf Basis von mindestens einem Polymer, das ausgewählt ist aus Polystyrol, Polyphenylenoxid, einem Gemisch aus Polystyrol und Polyphenylenoxid, Polyethylenterephthalat, Polycarbonat, Polyethersulfon, Polysulfon, Polyetherimid, einem aus Styrol hergestellten Copolymer oder ein Gemisch aus aus Styrol hergestellten Copolymeren. Besonders bevorzugt ist das Polymer Polystyrol, ein Gemisch aus Polystyrol und Poly(2,6-Dimethylphenylenoxid), ein Gemisch aus einem Styrol-Maleinsäureanhydrid-Polymer und einem Styrol-Acrylnitril-Polymer oder ein Styrol-Maleinsäureanhydrid-Polymer (SMA).

Polyphenylenoxid ist vorzugsweise Poly(2,6-Dimethylphenylenether), das auch als Poly(2,6-Dimethylphenylenoxid) bezeichnet wird.

Geeignete aus Phenylenoxid hergestellte Copolymere sind dem Fachmann bekannt. Geeignete Comonomere zu Phenylenoxid sind dem Fachmann ebenfalls bekannt.

Ein aus Styrol hergestelltes Copolymer weist vorzugsweise als Comonomer zu Styrol ein Monomer auf, das ausgewählt ist aus α-Methylstyrol, kernhalogenierten Styrolen, kernalkylierten Styrolen, Acrylnitril, Acrylsäureester, Methacrylsäureester, N-Vinylverbindungen, Maleinsäureanhydrid, Butadien, Divinylbenzol oder Butandioldiacrylat.

Der Schaumstoff ist beispielsweise aus einem Partikelschaumstoff, einem Extrusionsschaumstoff, einem Reaktivschaumstoff und/oder einem Batchschaumstoff hergestellt. Vorzugsweise ist der Schaumstoff aus einem Extrusionsschaumstoff hergestellt, insbesondere bevorzugt aus einem Extrusionsschaumstoff, der in einem Verfahren umfassend die folgenden Schritte hergestellt worden ist:
I) Bereitstellen einer Polymerschmelze in einem Extruder,
II) Einbringen von zumindest einem Treibmittel in die in Schritt I) bereitgestellte Polymerschmelze unter Erhalt einer schäumbaren Polymerschmelze,
III) Extrusion der in Schritt II) erhaltenen schäumbaren Polymerschmelze aus dem Extruder durch zumindest eine Düsenöffnung in einen Bereich niedrigeren Drucks, wobei die schäumbare Polymerschmelze expandiert unter Erhalt eines expandierten Schaums,
IV) Kalibrieren des expandierten Schaums aus Schritt III), indem der expandierte Schaum durch ein formgebendes Werkzeug durchgeführt wird, unter Erhalt des Extrusionsschaumstoffs,
V) gegebenenfalls spanende Bearbeitung des in Schritt IV) erhaltenen Extrusionsschaumstoffs,
wobei
i) die in Schritt I) bereitgestellte Polymerschmelze gegebenenfalls mindestens ein Additiv enthält, und/oder
ii) gegebenenfalls während Schritt II) zu der Polymerschmelze und/oder zwischen Schritt II) und Schritt III) zu der schäumbaren Polymerschmelze mindestens ein Additiv gegeben wird, und/oder
iii) gegebenenfalls während Schritt III) auf den expandierten Schaum und/oder während Schritt IV) auf den expandierten Schaum mindestens ein Additiv aufgebracht wird, und/oder
iv) gegebenenfalls während und/oder direkt im Anschluss an Schritt IV) auf den Extrusionsschaumstoff mindestens eine Schicht (S2) aufgebracht wird.

Zur Bereitstellung der Polymerschmelze in dem Extruder in Schritt I) eignen sich prinzipiell alle dem Fachmann bekannten Methoden, beispielsweise kann die Polymerschmelze in dem Extruder bereitgestellt werden, indem ein bereits fertig polymerisiertes Polymer aufgeschmolzen wird. Das Polymer kann direkt in dem Extruder aufgeschmolzen werden, ebenso ist es möglich, das Polymer in geschmolzener Form dem Extruder zuzuführen und so die Polymerschmelze in Schritt I) in dem Extruder bereitzustellen. Ebenso ist es möglich, dass die Polymerschmelze in Schritt I) bereitgestellt wird, indem die entsprechenden zur Herstellung des Polymers der Polymerschmelze benötigten Monomere zu dem Polymer miteinander in dem Extruder reagieren und so die Polymerschmelze bereitgestellt wird.

Unter einer Polymerschmelze wird vorliegend verstanden, dass das Polymer oberhalb der Schmelztemperatur (T_{M}) bei teilkristallinen Polymeren bzw. der Glasübergangstemperatur (T_{G}) bei amorphen Polymeren vorliegt.

Üblicherweise liegt die Temperatur der Polymerschmelze in Verfahrensschritt I) im Bereich von 100 bis 450 °C, bevorzugt im Bereich von 150 bis 350 °C und insbesondere bevorzugt im Bereich von 160 bis 300 °C.
In Schritt II) wird zumindest ein Treibmittel in die in Schritt I) bereitgestellte Polymerschmelze eingebracht. Verfahren hierzu sind dem Fachmann als solche bekannt.

Geeignete Treibmittel sind beispielsweise ausgewählt aus der Gruppe bestehend aus Kohlenstoffdioxid, Alkanen, wie Propan, Isobutan und Pentan, Alkoholen, wie Methanol, Ethanol, 1-Propanol, 2-Propanol, 1-Butanol, 2-Butanol, 2-Methylpropanol und tert-Butanol, Ethern wie Dimethylether, Ketonen, wie Aceton und Methylethylketon, halogenierten Kohlenwasserstoffen wie Hydrofluorpropen, Wasser, Stickstoff und Mischungen aus diesen.

In Schritt II) wird so die schäumbare Polymerschmelze erhalten. Die schäumbare Polymerschmelze enthält üblicherweise im Bereich von 1 bis 15 Gew.-% des zumindest einen Treibmittels, bevorzugt im Bereich von 2 bis 10 Gew.-% und insbesondere bevorzugt im Bereich von 3 bis 8 Gew.-%, jeweils bezogen auf das Gesamtgewicht der schäumbaren Polymerschmelze.

Der Druck im Extruder in Schritt II) liegt üblicherweise im Bereich von 20 bis 500 bar, bevorzugt im Bereich von 50 bis 400 bar und insbesondere bevorzugt im Bereich von 60 bis 300 bar.

In Schritt III) wird die in Schritt II) erhaltene schäumbare Polymerschmelze durch zumindest eine Düsenöffnung aus dem Extruder in einen Bereich niedrigeren Drucks extrudiert, wobei die schäumbare Polymerschmelze expandiert unter Erhalt des expandierten Schaums.

Verfahren zur Extrusion der schäumbaren Polymerschmelze sind dem Fachmann als solche bekannt.

Für die Extrusion der schäumbaren Polymerschmelze eignen sich alle dem Fachmann bekannten Düsenöffnungen. Die Düsenöffnung kann jede beliebige Form aufweisen, beispielsweise kann sie rechteckig, kreisförmig, ellipsenförmig, quadratisch oder hexagonal sein. Bevorzugt sind rechteckige Schlitzdüsen und kreisförmige Runddüsen.

In einer Ausführungsform wird die schäumbare Polymerschmelze durch genau eine Düsenöffnung, vorzugsweise durch eine Schlitzdüse, extrudiert. In einer weiteren Ausführungsform wird die schäumbare Polymerschmelze durch eine Vielzahl von Düsenöffnungen, vorzugsweise kreisförmige oder hexagonale Düsenöffnungen, extrudiert unter Erhalt einer Vielzahl von Strängen, wobei die Vielzahl von Strängen direkt nach dem Austreten aus den Düsenöffnungen zusammengeführt werden und den expandierten Schaum ausbilden. Die Vielzahl von Strängen kann auch erst in Schritt IV) durch das Durchführen durch das formgebende Werkzeug zusammengeführt werden.

Vorzugsweise ist die zumindest eine Düsenöffnung beheizt. Insbesondere bevorzugt wird die Düsenöffnung mindestens auf die Glasübergangstemperatur (T_{G}) des in der in Schritt I) bereitgestellten Polymerschmelze enthaltenen Polymers, wenn das Polymer ein amorphes Polymer ist, und mindestens auf die Schmelztemperatur T_{M} des in der in Schritt I) bereitgestellten Polymerschmelze enthaltenen Polymers, wenn das Polymer ein teilkristallines Polymer ist, geheizt, beispielsweise liegt die Temperatur der Düsenöffnung im Bereich von 80 bis 400 °C, vorzugsweise im Bereich von 100 bis 350 °C und insbesondere bevorzugt im Bereich von 110 bis 300 °C.

Die schäumbare Polymerschmelze wird in Schritt III) in einen Bereich niedrigeren Drucks extrudiert. Der Druck im Bereich niedrigeren Drucks liegt üblicherweise im Bereich von 0,05 bis 5 bar, bevorzugt im Bereich von 0,5 bis 1,5 bar.

Der Druck mit dem die schäumbare Polymerschmelze in Schritt III) aus der Düsenöffnung extrudiert wird, liegt üblicherweise im Bereich von 20 bis 600 bar, bevorzugt im Bereich von 40 bis 300 bar und insbesondere bevorzugt im Bereich von 50 bis 250 bar.

In Schritt IV) wird der expandierte Schaum aus Schritt III) kalibriert, indem der expandierte Schaum durch ein formgebendes Werkzeug durchgeführt wird unter Erhalt des Extrusionsschaumstoffs.

Durch die Kalibrierung des expandierten Schaums wird die Außenkontur des in Schritt IV) erhaltenen Extrusionsschaumstoffs bestimmt. Verfahren zur Kalibrierung sind dem Fachmann als solche bekannt.

Das formgebende Werkzeug kann direkt an der Düsenöffnung angeordnet sein. Ebenso ist es möglich, dass das formgebende Werkzeug von der Düsenöffnung entfernt angeordnet ist.

Formgebende Werkzeuge zum Kalibrieren des expandierten Schaums sind dem Fachmann als solche bekannt. Geeignete formgebende Werkzeuge umfassen beispielsweise Plattenkalibrierungen, Rollenabzüge, Dornkalibrierungen, Kettenabzüge und Bandabzüge. Um den Reibungskoeffizient zwischen den formgebenden Werkzeugen und dem Extrusionsschaumstoff zu verringern, können die Werkzeuge beschichtet und/oder beheizt werden.

Durch die Kalibrierung in Schritt IV) wird also die geometrische Form des Querschnitts des erfindungsgemäßen Extrusionsschaumstoffs in mindestens einer Dimension festgelegt. Vorzugsweise weist der Extrusionsschaumstoff einen nahezu rechtwinkligen Querschnitt auf. Falls die Kalibrierung teils nur in bestimmten Richtungen vorgenommen wird, kann der Extrusionsschaumstoff von der idealen Geometrie an den freien Flächen abweichen. Die Dicke des Extrusionsschaumstoffs wird dabei einerseits durch die Düsenöffnung bestimmt, andererseits auch durch das formgebende Werkzeug, gleiches gilt für die Breite des Extrusionsschaumstoffes.

Zur spanenden Bearbeitung des in Schritt IV) erhaltenen Extrusionsschaumstoffs in Schritt V) eignen sich prinzipiell alle dem Fachmann bekannte Methoden. Beispielsweise kann der Extrusionsschaumstoff durch sägen, fräsen, bohren oder hobeln spanend bearbeitet werden. Wenn der Extrusionsschaumstoff ein thermoplastischer Schaumstoff ist, ist zudem ein thermisches Umformen möglich, wodurch eine spanende Verarbeitung mit Schnittverlusten und einer Schädigung der Fasern (F) vermieden werden kann.

Als Additive eignen sich prinzipiell alle dem Fachmann bekannten Additive wie beispielsweise Nukleierungsmittel, Flammschutzmittel, Farben, Prozessstabilisatoren, Verarbeitungshilfsmittel, Lichtstabilisatoren und Pigmente.

Bezüglich der Schicht (S2), die in einer Ausführungsform auf den Extrusionsschaumstoff aufgebracht wird, gelten die weiter unten beschriebenen Ausführungen und Bevorzugungen.

Der erfindungsgemäße Schaumstoff umfasst üblicherweise Zellen. Durch die bevorzugte Herstellung des Schaumstoffs durch ein Extrusionsverfahren, insbesondere durch ein Extrusionsverfahren umfassend die Schritte I) bis V), sind üblicherweise mindestens 50 %, vorzugsweise mindestens 80 %, mehr bevorzugt mindestens 90 % der Zellen des Schaumstoffs, anisotrop.

Eine anisotrope Zelle weist in unterschiedlichen Raumrichtungen unterschiedliche Dimensionen auf, die größte Dimension der Zelle wird als a-Richtung und die kleinste Dimension als c-Richtung bezeichnet. Die dritte Dimension wird als b-Richtung bezeichnet. Die Dimensionen der Zellen können beispielsweise durch licht- oder elektronenmikroskopische Aufnahmen bestimmt werden.

Aus den anisotropen Eigenschaften der Zellen resultieren bevorzugt auch anisotrope Eigenschaften des Schaumstoffs.

Beispielsweise können zumindest eine der mechanischen Eigenschaften, vorzugsweise alle mechanischen Eigenschaften des Schaumstoffs, anisotrop sein und/oder zumindest eines der elastischen Moduli, vorzugsweise alle elastischen Moduli des Schaumstoffs anisotrop sein. Ebenso kann das Verhältnis der Druckfestigkeit in der Dicke (z-Richtung) des Schaumstoffs zu der Druckfestigkeit in der Länge (x-Richtung) des Schaumstoffs und/oder das Verhältnis der Druckfestigkeit in der Dicke (z-Richtung) des Schaumstoffs zu der Druckfestigkeit in der Breite (y-Richtung) des Schaumstoffs verschieden sein.

Der Schaumstoff kann beliebige Größen aufweisen. Üblicherweise weist der Schaumstoff eine Dicke (z-Richtung) im Bereich von 4 bis 200 mm, bevorzugt im Bereich von 5 bis 60 mm, eine Länge (x-Richtung) von mindestens 200 mm, vorzugsweise von mindestens 400 mm und eine Breite (y-Richtung) von mindestens 200 mm, vorzugsweise von mindestens 400 mm auf.

Der Schaumstoff weist zudem üblicherweise eine Länge (x-Richtung) von maximal 4000 mm, bevorzugt von maximal 2500 mm und/oder eine Breite (y-Richtung) von maximal 4000 mm, bevorzugt von maximal 2500 mm auf.

Der Schaumstoff weist üblicherweise eine Dichte im Bereich von 10 bis 150 kg/m³ auf, besonders bevorzugt im Bereich von 20 bis 100 kg/m³ und insbesondere bevorzugt im Bereich von 25 bis 60 kg/m³. Die Dichte wird erfindungsgemäß bestimmt nach ISO 845 Stand Oktober 2009.

Der Formkörper umfasst mindestens eine Faser (F).

"Mindestens eine Faser (F)" bedeutet im Rahmen der vorliegenden Erfindung sowohl genau eine Faser (F) als auch zwei oder mehrere Faser (F). Bevorzugt sind zwei oder mehrere Fasern (F).

Die Begriffe "mindestens eine Faser (F)" und "Faser (F)" werden im Rahmen der vorliegenden Erfindung synonym gebraucht und besitzen daher die gleiche Bedeutung.

Die Faser (F) in Schritt a) ist vorzugsweise eine einzelne Faser oder ein Faserbündel, besonders bevorzugt ein Faserbündel.

Als Faser (F) in Schritt a) eignen sich alle dem Fachmann bekannten Materialien, die Fasern bilden können. Beispielsweise ist die Faser (F) in Schritt a) eine organische, anorganische, metallische, keramische Faser oder eine Kombination daraus. Bevorzugt ist eine polymere Faser, Basaltfaser, Glasfaser, Kohlenstofffaser oder Naturfaser, insbesondere bevorzugt eine Polyaramidfaser, Glasfaser, Basaltfaser oder Kohlenstofffaser. Eine polymere Faser ist vorzugsweise eine Faser aus Polyester, Polyamid, Polyaramid, Polyethylen, Polyurethan, Polyvinylchlorid, Polyimid und/oder Polyamidimid. Eine Naturfaser ist vorzugsweise eine Faser aus Sisal, Hanf, Flachs, Bambus, Kokos und/oder Jute.

Bevorzugt werden Faserbündel als Faser (F) in Schritt b) bereitgestellt. Die Faserbündel setzen sich aus mehreren einzelnen Fasern (Filamenten) zusammen. Die Anzahl der Einzelfasern pro Bündel beträgt bevorzugt mindestens 10, besonders bevorzugt 100 bis 100 000, insbesondere bevorzugt 300 bis 10 000 bei Glasfasern und 1000 bis 50 000 bei Kohlenstofffasern und am meisten bevorzugt 500 bis 5 000 bei Glasfasern und 2 000 bis 20 000 bei Kohlenstoffasern.

Die Faser (F) weist erfindungsgemäß einen ersten Teil (FT1), einen zweiten Teil (FT2) und einen dritten Teil (FT3) auf. Ein erster Bereich (FB11) des ersten Teils (FT1) der Faser (F) befindet sich innerhalb des Formkörpers und ist von dem Schaumstoff umschlossen. Ein zweiter Bereich (FB21) des ersten Teils (FT1) der Faser (F) ragt aus der ersten Seite des Schaumstoffs heraus. Ein erster Bereich (FB12) des zweiten Teils (FT2) der Faser (F) befindet sich ebenfalls innerhalb des Formkörpers und ist von dem Schaumstoff umschlossen. Ein zweiter Bereich (FB22) des zweiten Teils (FT2) der Faser (F) ragt aus der ersten Seite heraus. Der dritte Teil (FT3) der Faser (F) verbindet den ersten Teil (FT1) und den zweiten Teil (FT2) der Faser (F) und ist auf der zweiten Seite des Schaumstoffs angeordnet. Der erste Bereich (FB11) des ersten Teils (FT1) der Faser (F) und der erste Bereich (FB12) des zweiten Teils (FT2) der Faser (F) berühren sich nicht.

Der erste Bereich (FB11) des ersten Teils (FT1) der Faser (F) und der erste Bereich (FB12) des zweiten Teils (FT2) der Faser (F) sind daher durch den Schaumstoff voneinander getrennt.

Erfindungsgemäß bevorzugt ist der erste Bereich (FB11) des ersten Teils (FT1) der Faser (F) parallel zum ersten Bereich (FB12) des zweiten Teils (FT2) der Faser (F) ausgerichtet.

Unter "parallel" wird im Rahmen der vorliegenden Erfindung nicht nur die genaue parallele Ausrichtung des ersten Bereichs (FB11) des ersten Teils (FT1) der Faser (F) zu dem ersten Bereich (FB12) des zweiten Teils (FT2) der Faser (F) verstanden, sondern auch eine Abweichung von der parallelen Ausrichtung von maximal +/-10°, bevorzugt von maximal +/- 5° und insbesondere bevorzugt von maximal +/- 1°.

Der erste Teil (FT1) der Faser (F) ist bevorzugt in einem Winkel α_{FT1} relativ zur Dickenrichtung (d) des Formkörpers bzw. zur Orthogonalen (der Oberfläche) der ersten Seite des Schaumstoffs in den Formkörper eingebracht. Der Winkel α_{FT1} kann beliebige Werte von 0 bis 90° annehmen, beispielsweise ist der erste Teil (FT1) der Faser (F) in einem Winkel α_{FT1} von 0 bis 60° , vorzugsweise von 0 bis 50°, mehr bevorzugt von 0 bis 15° oder von 10 bis 70°, insbesondere bevorzugt von 30 bis 60°, mehr bevorzugt von 30 bis 50°, noch mehr bevorzugt von 30 bis 45°, insbesondere bevorzugt von 45°, relativ zur Dickenrichtung (d) des Formkörpers in den Schaumstoff eingebracht.
Der zweite Teil (FT2) der Faser (F) ist bevorzugt in einem Winkel α_{FT2} relativ zur Dickenrichtung (d) des Formkörpers bzw. zur Orthogonalen (der Oberfläche) der ersten Seite des Schaumstoffs in den Formkörper eingebracht. Der Winkel α_{FT1} kann beliebige Werte von 0 bis 90° annehmen, beispielsweise ist der zweite Teil (FT2) der Faser (F) in einem Winkel α_{FT2} von 0 bis 60°, vorzugsweise von 0 bis 50°, mehr bevorzugt von 0 bis 15° oder von 10 bis 70°, insbesondere bevorzugt von 30 bis 60°, mehr bevorzugt von 30 bis 50°, noch mehr bevorzugt von 30 bis 45°, insbesondere bevorzugt von 45°, relativ zur Dickenrichtung (d) des Formkörpers in den Schaumstoff eingebracht.

Bevorzugt werden der erste Teil (FT1) der Faser (F) und der zweite Teil (FT2) der Faser (F) in dem gleichen Winkel α = α_{FT1} = α_{FT2} in den Schaumstoff eingebracht.

Insbesondere in dieser Ausführungsform ist es möglich, dass zumindest zwei unterschiedliche Fasern (F), die jeweils einen ersten Teil (FT1), einen zweiten Teil (FT2) und einen dritten Teil (FT3) aufweisen in den Schaumstoff eingebracht werden. Der erste Teil (FT1) jeder der zumindest zwei Fasern (F) weist dann einen ersten Bereich (FB11) und einen zweiten Bereich (FB21), für die jeweils die vorstehend beschriebenen Ausführungen und Bevorzugungen gelten, auf. Ebenso weist der zweite Teil (FT2) jeder der zumindest zwei Fasern (F) einen ersten Bereich (FB12) und einen zweiten Bereich (FB22), für die jeweils die vorstehend beschriebenen Ausführungen und Bevorzugungen gelten, auf. Dabei ist es bevorzugt, dass der erste Teil (FT1) und der zweite Teil (FT2) einer Faser (F) jeweils in dem gleichen Winkel α = α_{FT1} = α_{FT2} relativ zur Dickenrichtung (d) in den Schaumstoff eingebracht sind. Der Winkel α_{F1} des ersten Teils (FT1) und des zweiten Teils (FT2) der ersten Faser (F1) ist dann vorzugsweise von dem Winkel α_{F2} des ersten Teils (FT1) und des zweiten Teils (FT2) der zweiten Faser (F2) verschieden. Der Winkel α_{F1} liegt dann vorzugsweise im Bereich von 0 bis 15° und der Winkel α_{F2} im Bereich von 30 bis 50°, insbesondere bevorzugt liegt der Winkel α_{F1} im Bereich von 0 bis 5° und der Winkel α_{F2} im Bereich von 40 bis 50°.

Insbesondere bevorzugt weisen sämtliche Fasern (F) und damit auch sämtliche erste Teile (FT1) und zweite Teile (FT2) im erfindungsgemäßen Formkörper den gleichen Winkel α oder zumindest einen annähernd gleichen Winkel (Abweichung von maximal +/- 5°, vorzugsweise +/-2°, besonders bevorzugt +/- 1°) auf. Dann liegen die zumindest zwei Fasern (F) beispielsweise parallel zueinander vor.

Sämtliche Fasern (F) können parallel zueinander im Formkörper vorliegen. Ebenso ist es möglich dass zwei oder mehrere Fasern (F) in einem Winkel β zueinander in dem Formkörper vorliegen. Unter dem Winkel β wird im Rahmen der vorliegenden Erfindung der Winkel zwischen der senkrechten Projektion des ersten Teils (FT1) einer ersten Faser (F1) auf die Oberfläche der ersten Seite des Formkörpers und der senkrechten Projektion des ersten Teils (FT1) der zweiten Faser (F2) auf die Oberfläche der ersten Seite des Formkörpers verstanden, wobei beide Fasern (F1 und F2) in den Formkörper eingebracht sind.

Entsprechend können auch der zweite Teil (FT2) einer ersten Faser (F1) und der zweite Teil (FT2) einer zweiten Faser (F2) in einem Winkel β zueinander vorliegen.

Besonders bevorzugt sind sämtliche Winkel β zwischen den ersten Teilen (FT1) zweier Fasern (F) und den zweiten Teilen (FT2) zweier Fasern (F) gleich.

Daher wird nachfolgend Bezug genommen auf den Winkel β zwischen einer ersten Faser (F1) und einer zweiten Faser (F2). Es versteht sich von selbst, dass dabei der Winkel β zwischen dem ersten Teil (FT1) der ersten Faser (F1) und dem ersten Teil (FT1) der zweiten Faser (F2) gemeint ist, beziehungsweise der Winkel β zwischen dem zweiten Teil (FT2) der ersten Faser (F1) und dem zweiten Teil (FT2) der zweiten Faser (F2). Der Winkel β liegt vorzugsweise im Bereich β = 360°/n, wobei n eine ganzzahlige Zahl ist. Bevorzugt liegt n im Bereich von 2 bis 6, besonders bevorzugt im Bereich von 2 bis 4. Beispielsweise liegt der Winkel β bei 90°, 120° oder 180°. In einer weiteren Ausführungsform liegt der Winkel β im Bereich von 80 bis 100°, im Bereich von 110 bis 130° oder im Bereich von 170 bis 190°.

In einer weiteren Ausführungsform werden mehr als zwei Fasern (F) in einem Winkel β zueinander eingebracht, beispielsweise drei oder vier Fasern (F). Diese drei oder vier Fasern (F) können jeweils zu den beiden benachbarten Fasern zwei unterschiedliche Winkel β, β₁ und β₂, aufweisen. Bevorzugt weisen alle Fasern (F) zu den beiden benachbarten Fasern (F) die gleichen Winkel β = β₁ = β₂ auf. Beispielsweise beträgt der Winkel β 90°, dann beträgt der Winkel β₁ zwischen der ersten Faser (F1) und der zweiten Faser (F2) 90°. Der Winkel β₂ zwischen der zweiten Faser (F2) und der dritten Faser (F3) 90°, der Winkel β₃ zwischen der dritten Faser (F3) und der vierten Faser (F4) 90° und der Winkel β₄ zwischen der vierten Faser (F4) und der ersten Faser (F1) ebenfalls 90°. Als Winkel β zwischen der ersten Faser (F1) (Referenz) und der zweiten Faser (F2), dritten Faser (F3) und vierten Faser (F4) ergeben sich dann im Uhrzeigersinn 90°, 180° und 270°. Analoge Betrachtungen gelten für andere mögliche Winkel β.

Die erste Faser (F1) weist dann eine erste Richtung auf, die zweite Faser (F2), die in einem Winkel β zur ersten Faser (F1) angeordnet ist, weist eine zweite Richtung auf. Bevorzugt weisen die erste Faser (F1) und die zweite Faser (F2) eine ähnliche Anzahl an Teilen (FT) auf. Unter "Teilen (FT) der Faser (F)" werden im Rahmen der vorliegenden Erfindung der erste Teil (FT1), der zweite Teil (FT2) und der dritte Teil (FT3), sowie die weiter unten beschriebenen weiteren Teile der Faser (F) verstanden.

Unter "ähnlich" wird vorliegend verstanden, dass der Unterschied zwischen der Anzahl der Teile (FT) der Faser (F) in jeder Richtung relativ zu der anderen Richtung < 30 %, bevorzugt < 10 % und insbesondere bevorzugt < 2 %, ist.

Die Faser (F) kann weitere Teile aufweisen. Sie kann beispielsweise 4 bis 80000 weitere Teile, bevorzugt 8000 bis 32000 weitere Teile aufweisen.

Beispielsweise kann die Faser (F) einen vierten Teil (FT4), einen fünften Teil (FT5), einen sechsten Teil (FT6) und eine siebten Teil (FT7) aufweisen. Der vierte Teil (FT4) und der sechste Teil (FT6) weisen jeweils einen ersten Bereich (FB14, FB16) auf, der sich innerhalb des Formkörpers befindet und von dem Schaumstoff umschlossen ist und einen zweiten Bereich (FB24, FB26), der aus der ersten Seite des Schaumstoffs herausragt. Der fünfte Teil (FT5) der Faser (F) verbindet dann den zweiten Teil (FT2) und den vierten Teil (FT4) der Faser (F), der siebte Teil (FT7) der Faser (F) verbindet den vierten Teil (FT4) und den sechsten Teil (FT6) der Faser (F). Sämtliche ersten Bereiche (FB1) der Teile (FT) der Faser (F) sind durch den Schaumstoff voneinander getrennt.

Weist die Faser (F) mehr als die beispielshaft beschriebenen sieben Teile auf, so ist dem Fachmann anhand der vorstehenden Ausführungen klar, wie die mehr als sieben Teile in dem Formkörper angeordnet sind und welche der mehr als sieben Teile einen ersten Bereich (FB1) und einen zweiten Bereich (FB2) aufweisen.

Der erste Bereich (FB1) des ersten Teils (FT1) der Faser (F) und der erste Bereich (FB12) des zweiten Teils (FT2) der Faser (F) weisen einen Abstand a zueinander auf.

Der Abstand a kann beliebig sein. Vorzugsweise liegt der Abstand a im Bereich von 3 bis 100 mm, bevorzugt im Bereich von 7 bis 30 mm und insbesondere bevorzugt im Bereich von 10 bis 20 mm.

Weist die mindestens eine Faser (F) weitere Teile auf, beispielsweise einen vierten Teil (FT4), einen fünften Teil (FT5), einen sechsten Teil (FT6) und einen siebten Teil (FT7), so ist es bevorzugt, dass die ersten Bereiche (FB1) direkt benachbarter Teile (FT) der Faser (F), den gleichen Abstand a aufweisen.

Erfindungsgemäß verbindet der dritte Teil (FT3) der Faser (F) den ersten Teil (FT1) und den zweiten Teil (FT2) der Faser (F) und ist auf der zweiten Seite des Schaumstoffs angeordnet. Dabei ist es bevorzugt, dass der dritte Teil (FT3) der Faser (F) parallel zur zweiten Seite des Schaumstoffs ausgerichtet ist.

Unter "parallel" wird im Rahmen der vorliegenden Erfindung verstanden, dass der dritte Teil (FT3) der Faser (F) nicht nur genau parallel zu der zweiten Seite des Schaumstoffs ausgerichtet sein kann, sondern auch um einen Winkel von +/-10°, bevorzugt von +/-5°, insbesondere bevorzugt von +/- 1° von der parallelen Ausrichtung abweichen kann.

Zudem ist für den Fachmann klar, dass auch nur ein Abschnitt des dritten Teils (FT3) der Faser (F) parallel zur zweiten Seite des Schaumstoffs ausgerichtet sein kann. Beispielsweise können zwei Abschnitte des dritten Teils (FT3) der Faser (F) gebogen sein, da diese jeweils mit dem ersten Teil (FT1) und dem zweiten Teil (FT2) der Faser (F) verbunden sind und der dritte Teil (FT3) kann nur mit seinem mittleren Abschnitt parallel zur zweiten Seite des Schaumstoffs ausgerichtet sein.

Es ist außerdem bevorzugt, dass der dritte Teil (FT3) der Faser (F) mit der zweiten Seite des Schaumstoffs in Kontakt ist. Für den Fachmann ist klar, dass auch nur ein Abschnitt des dritten Teils (FT3) der Faser (F) mit der zweiten Seite des Schaumstoffs in Kontakt sein kann. Beispielsweise können zwei Abschnitte des dritten Teils (FT3) der Faser (F) gebogen sein, da sie jeweils mit dem ersten Teil (FT1) der Faser (F) und dem zweiten Teil (FT2) der Faser (F) verbunden sind und der dritte Teil (FT3) der Faser (F) kann nur mit seinem mittleren Abschnitt mit der zweiten Seite des Schaumstoffs in Kontakt sein.

Es kann also nur ein Abschnitt des dritten Teils (FT3) der Faser (F) mit der zweiten Seite des Schaumstoffs in Kontakt sein.

Es ist insbesondere bevorzugt, dass der dritte Teil (FT3) der Faser (F) parallel zur zweiten Seite des Schaumstoffs ausgerichtet ist und dass der dritte Teil (FT3) der Faser (F) mit der zweiten Seite des Schaumstoffs in Kontakt ist. Dabei gelten jeweils die zuvor beschriebenen Ausführungen und Bevorzugungen.

Erfindungsgemäß ragt der zweite Bereich (FB21) des ersten Teils (FT1) der Faser (F) aus der ersten Seite des Schaumstoffs heraus. Ebenso ragt der zweite Bereich (FB22) des zweiten Teils (FT2) der Faser (F) aus der ersten Seite des Schaumstoffs heraus. Der zweite Bereich (FB21) des ersten Teils (FT1) der Faser (F) und der zweite Bereich (FB22) des zweiten Teils (FT2) der Faser (F) kann beliebige Formen aufweisen. Beispielsweise können sie schlaufenförmig sein oder in Form von aufgeschnittener Schlaufen. Schlaufenförmig wird auch als "schlingenförmig" bezeichnet.

Es ist daher bevorzugt, dass der zweite Bereich (FB21) des ersten Teils (FT1) der Faser (F) schlaufenförmig ist und/oder der zweite Bereich (FB22) des zweiten Teils (FT2) der Faser (F) schlaufenförmig ist. Bevorzugt sind der zweite Bereich (FB21) des ersten Teils (FT1) der Faser (F) und der zweite Bereich (FB22) des zweiten Teils (FT2) der Faser (F) schlaufenförmig.

Es versteht sich von selbst, dass, wenn die Faser (F) weitere Teile aufweist, die zuvor beschriebenen Ausführungen und Bevorzugungen für den ersten Teil (FT1), den zweiten Teil (FT2) und den dritten Teil (FT3) für den jeweiligen weiteren Teil entsprechend gelten.

Wenn die Faser (F) weitere Teile aufweist, so ist es bevorzugt, dass mindestens 80 %, bevorzugt mindestens 90 % der zweiten Bereiche (FB2) der Teile (FT) der Faser (F) schlaufenförmig sind. Insbesondere bevorzugt sind mindestens 80 %, bevorzugt mindestens 90 %, insbesondere bevorzugt mindestens 95 % der zweiten Bereiche (FB2) der Teile (FT) der Faser (F) schlaufenförmig und der Formkörper weist 500 bis 40000 zweite Bereiche (FB2) der Faser (F) pro m² auf.

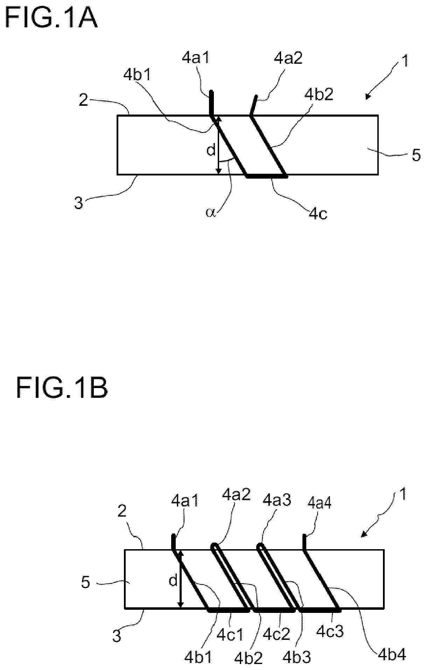

Figur 1a zeigt einen beispielhaften erfindungsgemäßen Formkörper (1). Die Bezugszeichen (2) und (3) markieren die erste Seite und die zweite Seite des Formkörpers. In den Formkörper ist eine Faser (F) eingebracht, die einen ersten Teil (4a1 und 4b1), einen zweiten Teil (4a2 und 4b2) sowie einen dritten Teil (4c) aufweist. Der erste Bereich (4b1) des ersten Teils (FT1) der Faser (F) sowie der erste Bereich (4b2) des zweiten Teils (FT2) der Faser (F) befinden sich innerhalb des Schaumstoffs (5). Der zweite Bereich (4a1) des ersten Teils der Faser (F) und der zweite Bereich (4a2) des zweiten Teils (FT2) der Faser (F) ragen aus der ersten Seite (2) des Schaumstoffs (5) heraus. Der dritte Teil (4c) der Faser (F) verbindet den ersten Teil (FT1) der Faser (F) mit dem zweiten Teil (FT2) der Faser (F) und ist an der zweiten Seite (3) des Schaumstoffs (5) angeordnet.

Die Figur 1b zeigt eine weitere bevorzugte Ausführungsform des erfindungsgemäßen Formkörpers, bei dem die Faser (F) weitere Teile aufweist. Der erste Teil, der zweite Teil, der vierte Teil und der sechste Teil der Faser befinden sich jeweils mit einem ersten Bereich (4b1, 4b2, 4b3 und 4b4) innerhalb des Schaumstoffs und ein zweiter Bereich (4a1, 4a2, 4a3 und 4a4) ragt jeweils zur ersten Seite (2) des Schaumstoffs (5) heraus. Der dritte Teil (4c1) verbindet den ersten Teil und den zweiten Teil der Faser und ist an der zweiten Seite (3) des Schaumstoffs (5) angeordnet. Der fünfte Teil (4c2) verbindet den zweiten Teil mit dem vierten Teil der Faser und ist an der zweiten Seite (3) des Schaumstoffs (5) angeordnet. Der siebte Teil (4c3) verbindet den vierten Teil der Faser mit dem sechsten Teil der Faser und ist an der zweiten Seite (3) des Schaumstoffs (5) angeordnet.

Erfindungsgemäß ist der Formkörper erhältlich nach einem Verfahren umfassend die folgenden Schritte a) bis k):
a) Bereitstellen des Schaumstoffs,
b) Bereitstellen der Faser (F) auf der zweiten Seite des Schaumstoffs,
c) Erzeugen von einem ersten Loch je Faser (F) in dem Schaumstoff, wobei sich das erste Loch von der ersten Seite zur zweiten Seite des Schaumstoffs erstreckt,
d) Erzeugen von einem zweiten Loch je Faser (F) in dem Schaumstoff, wobei sich das zweite Loch von der ersten Seite zur zweiten Seite des Schaumstoffs erstreckt,
e) Durchführen einer Nadel von der ersten Seite des Schaumstoffs durch das erste Loch zur zweiten Seite des Schaumstoffs,
f) Befestigen eines ersten Teils (FT1) der Faser (F) an der Nadel auf der zweiten Seite des Schaumstoffs,
g) Rückführen der Nadel zusammen mit dem ersten Teil (FT1) der Faser (F) durch das erste Loch zur ersten Seite des Schaumstoffs,
h) Durchführen einer Nadel von der ersten Seite des Schaumstoffs durch das zweite Loch zur zweiten Seite des Schaumstoffs,
i) Befestigen des zweiten Teils (FT2) der Faser (F) an der Nadel auf der zweiten Seite des Schaumstoffs,
j) Rückführen der Nadel zusammen mit dem zweiten Teil (FT2) der Faser (F) durch das zweite Loch zur ersten Seite des Schaumstoffs und
k) Erhalt des Formkörpers.

Für den in Schritt a) bereitgestellten Schaumstoff gelten die zuvor beschriebenen Ausführungen und Bevorzugungen für den im Formkörper enthaltenen Schaumstoff entsprechend.

Der Schaumstoff kann nach allen dem Fachmann bekannten Methoden in Schritt a) bereitgestellt werden. Vorzugsweise wird er gemäß dem vorstehend beschriebenen Extrusionsverfahren bereitgestellt.

Der in Schritt a) bereitgestellte Schaumstoff weist bevorzugt auf der ersten Seite und/oder auf der zweiten Seite eine Schicht (S2) auf. Für die Schicht (S2) gelten die weiter unten beschriebenen Ausführungen und Bevorzugungen, für die gegebenenfalls im erfindungsgemäßen Paneel enthaltene Schicht (S2) entsprechend.

Für die in Schritt b) bereitgestellte Faser (F) gelten die zuvor für die im Formkörper enthaltene Faser (F) beschriebenen Ausführungen und Bevorzugungen entsprechend.

Bevorzugt ist der Durchmesser des ersten Lochs und des zweiten Lochs kleiner als der doppelte Durchmesser der Faser (F).

Erfindungsgemäß bevorzugt werden die Schritte c) und e) gleichzeitig durchgeführt und/oder die Schritte d) und h) gleichzeitig durchgeführt. In diesem Fall wird also das erste Loch je Faser (F) in dem Schaumstoff durch das Durchführen einer Nadel von der ersten Seite des Schaumstoffs zur zweiten Seite des Schaumstoffs erzeugt. Entsprechend wird das zweite Loch je Faser (F) durch das Durchführen einer Nadel von der ersten Seite des Schaumstoffs zur zweiten Seite des Schaumstoffs erzeugt. Besonders bevorzugt werden die Schritte c), d) e) und h) gleichzeitig durchgeführt. In dieser Ausführungsform werden also für das erste Loch eine ersten Nadel eingesetzt und für das zweite Loch eine zweite Nadel eingesetzt.

Wie vorstehend beschrieben, ist es bevorzugt, dass der in Schritt a) bereitgestellte Schaumstoff auf der ersten Seite und/oder auf der zweiten Seite eine Schicht (S2) aufweist. In diesem Fall wird in Schritt c) das erste Loch je Faser (F) zusätzlich in der Schicht (S2) erzeugt und in Schritt d) das zweite Loch je Faser (F) zusätzlich in der Schicht (S2) erzeugt und in den Schritten e) und h) die Nadel zusätzlich durch die Schicht (S2) durchgeführt.

Es versteht sich von selbst, dass, wenn die Faser (F) weitere Teile aufweist, diejenigen weiteren Teile, die einen ersten Bereich (FB1) und einen zweiten Bereich (FB2) aufweisen, entsprechend der vorstehend beschriebenen Schritte, in den Schaumstoff eingebracht werden und dass dann auch entsprechend den vorstehend beschriebenen Schritten c) und d), weitere Löcher im Schaumstoff erzeugt werden, beispielsweise ein drittes Loch, ein viertes Loch und ein fünftes Loch. Es gelten dann die vorstehend beschriebenen Ausführungen und Bevorzugungen entsprechend.

Gegenstand der vorliegenden Erfindung ist daher auch ein Verfahren zur Herstellung eines erfindungsgemäßen Formkörpers, umfassend die Schritte a) bis k):
a) Bereitstellen des Schaumstoffs,
b) Bereitstellen der Faser (F) auf der zweiten Seite des Schaumstoffs,
c) Erzeugen von einem ersten Loch je Faser (F) in dem Schaumstoff, wobei sich das erste Loch von der ersten Seite zur zweiten Seite des Schaumstoffs erstreckt,
d) Erzeugen von einem zweiten Loch je Faser (F) in dem Schaumstoff, wobei sich das zweite Loch von der ersten Seite zur zweiten Seite des Schaumstoffs erstreckt,
e) Durchführen einer Nadel von der ersten Seite des Schaumstoffs durch das erste Loch zur zweiten Seite des Schaumstoffs,
f) Befestigen des ersten Teils (FT1) der Faser (F) an der Nadel auf der zweiten Seite des Schaumstoffs,
g) Rückführen der Nadel zusammen mit dem ersten Teil (FT1) der Faser (F) durch das erste Loch zur ersten Seite des Schaumstoffs,
h) Durchführen einer Nadel von der ersten Seite des Schaumstoffs durch das zweite Loch zur zweiten Seite des Schaumstoffs,
i) Befestigen des zweiten Teils (FT2) der Faser (F) an der Nadel auf der zweiten Seite des Schaumstoffs,
j) Rückführen der Nadel zusammen mit dem zweiten Teil (FT2) der Faser (F) durch das zweite Loch zur ersten Seite des Schaumstoffs und
k) Erhalt des Formkörpers.

Für das erfindungsgemäße Verfahren gelten die zuvor beschriebenen Ausführungen und Bevorzugungen für das Verfahren, nach dem der Formkörper erhältlich ist, entsprechend.

Bevorzugt werden daher die Schritte c) und e) gleichzeitig durchgeführt und/oder die Schritte d) und h) gleichzeitig durchgeführt, besonders bevorzugt werden die Schritte c), d), e) und h) gleichzeitig durchgeführt.

Bevorzugt umfasst das Verfahren zur Herstellung des erfindungsgemäßen Formkörpers daher die folgenden Schritte a-1) bis k-1):
a-1) Bereitstellen des Schaumstoffs,
b-1) Bereitstellen der Faser (F) auf der zweiten Seite des Schaumstoffs,
c-1) Erzeugen von einem ersten Loch je Faser (F) in dem Schaumstoff, wobei sich das erste Loch von der ersten Seite zur zweiten Seite des Schaumstoffs erstreckt und wobei die Erzeugung des ersten Lochs durch das Durchführen einer Nadel durch den Schaumstoff erfolgt,
d-1) Befestigen des ersten Teils (FT1) der Faser (F) an der Nadel auf der zweiten Seite des Schaumstoffs,
e-1) Rückführen der Nadel zusammen mit dem ersten Teil (FT1) der Faser (F) durch das erste Loch zur ersten Seite des Schaumstoffs,
f-1) Erzeugung von einem zweiten Loch je Faser (F) in dem Schaumstoff, wobei sich das zweite Loch von der ersten Seite zur zweiten Seite des Schaumstoffs erstreckt und wobei die Erzeugung des zweiten Lochs durch das Durchführen einer Nadel durch den Schaumstoff erfolgt,
g-1) Befestigen des zweiten Teils (FT2) der Faser (F) an der Nadel auf der zweiten Seite des Schaumstoffs,
h-1) Rückführen der Nadel zusammen mit dem zweiten Teil (FT2) der Faser (F) durch das zweite Loch zur ersten Seite des Schaumstoffs und
i-1) Erhalt des Formkörpers,
wobei vorzugsweise die Schritte c-1) und f-1) sowie die Schritte d-1) und g-1) sowie e-1) und h-1) gleichzeitig durchgeführt werden.

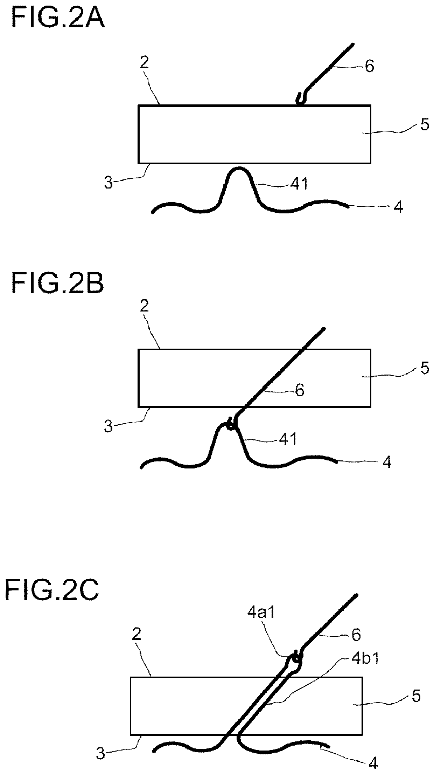

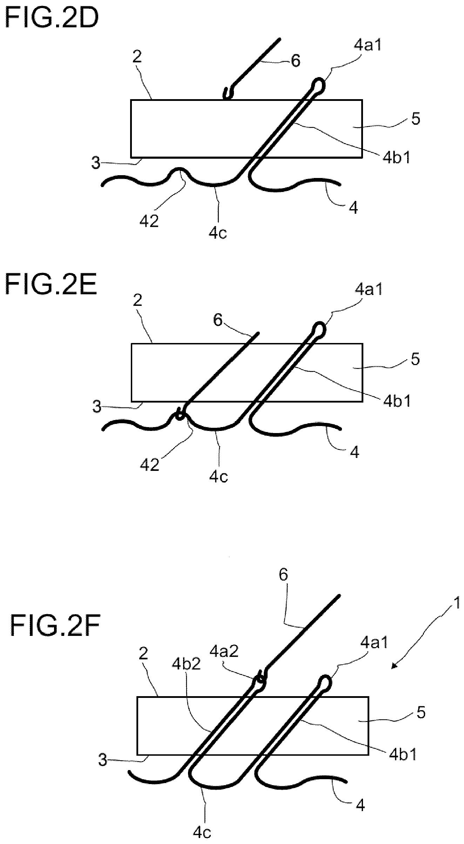

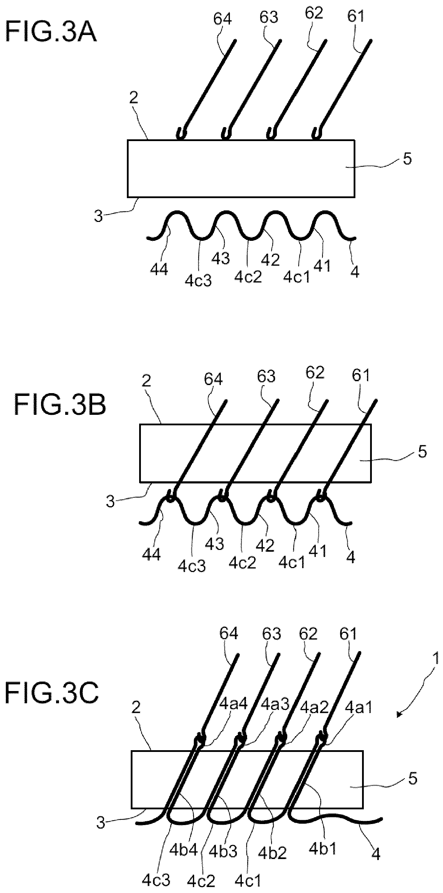

Die Figuren 2 und 3 zeigen bevorzugte Ausführungsformen des erfindungsgemäßen Verfahrens zur Herstellung eines erfindungsgemäßen Formkörpers.

In Figur 2 wird die Herstellung eines erfindungsgemäßen Formkörpers gezeigt, wobei die Schritte c) und e) sowie die Schritte d) und h) gleichzeitig durchgeführt werden.

In Figur 2a wird ein Schaumstoff (5) mit einer ersten Seite (2) und einer zweiten Seite (3) bereitgestellt. Auf der zweiten Seite wird eine Faser (4) mit einem ersten Teil (41) bereitgestellt. Auf der ersten Seite (2) wird eine Nadel (6) bereitgestellt.

In Figur 2b wird durch das Durchführen der Nadel (6) von der ersten Seite (2) zur zweiten Seite (3) des Schaumstoffs (5) ein Loch erzeugt und auf der zweiten Seite (3) des Schaumstoffs der erste Teil (41) der Faser (4) in die Nadel (6) eingehängt.

In Figur 2c wurde die Nadel (6) von der zweiten Seite (3) des Schaumstoffs (5) zur ersten Seite (2) rückgeführt durch das zweite Loch. Der erste Teil der Faser (4) wurde ebenfalls durch das Loch geführt, so dass sich ein erster Bereich (4b1) des ersten Teils der Faser (4) innerhalb des Schaumstoffs (5) befindet und ein zweiter Bereich (4a1) des ersten Teils der Faser (4) zur ersten Seite (2) des Schaumstoffs (5) herausragt.

In Figur 2d wurde die Nadel (6) ausgehängt, so dass der zweite Bereich (4a1) des ersten Teils der Faser (4) schlaufenförmig bzw. schlingenförmig ist. Ebenso wäre es möglich, den zweiten Bereich (4a1) des ersten Teils der Faser (4) zum Aushängen der Nadel (6) durchzuschneiden.

In Figur 2e wurde das zweite Loch durch das Durchführen der Nadel (6) von der ersten Seite (2) zur zweiten Seite (3) des Schaumstoffs (5) erzeugt und der zweite Teil (42) der Faser (4) in die Nadel (6) eingehängt, wobei der erste Teil der Faser mit dem zweiten Teil (42) der Faser (4) über den dritten Teil (4c) verbunden ist.

In Figur 2f wurde die Nadel (6) rückgeführt, so dass sich der zweite Teil der Faser (4) mit einem ersten Teil (4b2) innerhalb des Schaumstoffs (5) befindet und der zweite Bereich (4a2) des zweiten Teils der Faser (4) zur ersten Seite (2) des Schaumstoffs (5) herausragt. So wird der erfindungsgemäße Formkörper (1) erhalten. Die Nadel (6) kann aus dem zweiten Bereich (4a2) des zweiten Teils der Faser (4) ausgehängt werden, so dass der zweite Bereich (4a2) schlaufenförmig bzw. schlingenförmig ist. Ebenso ist es möglich, den zweiten Bereich (4a2) durchzuschneiden und so die Nadel (6) auszuhängen.

Figur 3 zeigt die Ausführungsform, in der das erste und das zweite Loch sowie die weiteren Löcher gleichzeitig erzeugt werden. Dazu werden, wie in Figur 3a gezeigt, eine erste Nadel (61), ein zweite Nadel (62), eine dritte Nadel (63) und eine vierte Nadel (64) auf der ersten Seite (2) des Schaumstoffs (5) bereitgestellt, während auf der zweiten Seite (3) des Schaumstoffs (5) eine Faser (4) bereitgestellt wird, die einen ersten Bereich (41), einen zweiten Bereich (42), einen vierten Bereich (43) und einen sechsten Bereich (44) aufweist, die jeweils über einen dritten Bereich (4c1), einen fünften Bereich (4c2) und einen siebten Bereich (4c3) miteinander verbunden sind.

In Figur 3b wurden die erste Nadel (61), die zweite Nadel (62), die dritte Nadel (63) und die vierte Nadel (64) von der ersten Seite (2) des Schaumstoffs (5) zur zweiten Seite (3) des Schaumstoffs (5) durch den Schaumstoff (5) durchgeführt, wobei ein erstes Loch, ein zweites Loch, ein drittes Loch und ein viertes Loch erzeugt worden sind und der erste Teil (41) der Faser (4) wurde in die erste Nadel (61) eingehängt, der zweite Teil (42) der Faser (4) wurde in die zweite Nadel (62) eingehängt, der vierte Teil (43) der Faser (4) wurde in die dritte Nadel (63) eingehängt und der sechste Teil (44) der Faser (4) wurde in die vierte Nadel (64) eingehängt.
In Figur 3c ist zu sehen, dass die erste Nadel (61) durch das erste Loch rückgeführt worden ist, die zweite Nadel (62) durch das zweite Loch, die dritte Nadel (63) durch das dritte Loch und die vierte Nadel (64) durch das vierte Loch. Dieses Rückführen erfolgte gleichzeitig, so dass sich die ersten Bereiche (4b1, 4b2, 4b3, 4b4) der Faser (4) innerhalb des Schaumstoffs (5) befinden und die zweiten Bereiche (4a1, 4a2, 4a3, 4a4) der Faser (4) zur ersten Seite (2) des Schaumstoffs (5) herausragen. Der dritte Teil (4c1), der fünfte Teil (4c2) und der siebte Teil (4c3) verbinden jeweils die anderen Teile miteinander.

Gegenstand der vorliegenden Erfindung ist außerdem ein Paneel, das mindestens einen erfindungsgemäßen Formkörper und mindestens eine Schicht (S1) umfasst. Ein "Paneel" kann gegebenenfalls in Fachkreisen auch als "Sandwich", "Sandwichmaterial", "Laminat" und/oder "Compositartikel" bezeichnet werden.

In einer bevorzugten Ausführungsform des Paneels weist das Paneel zwei Schichten (S1) auf, und die beiden Schichten (S1) sind jeweils an einer Seite des Formkörpers angebracht, die der jeweils anderen Seite im Formkörper gegenüberliegt.

In einer Ausführungsform des erfindungsgemäßen Paneels umfasst die Schicht (S1) mindestens ein Harz, vorzugsweise ist das Harz ein reaktives duroplastisches oder thermoplastisches Harz, mehr bevorzugt ist das Harz auf der Basis von Epoxiden, Acrylaten, Polyurethanen, Polyamiden, Polyestern, ungesättigten Polyestern, Vinylestern oder Mischungen daraus, insbesondere ist das Harz ein aminisch härtendes Epoxidharz, ein latent härtendes Epoxidharz, ein anhydridisch härtendes Epoxidharz oder ein Polyurethan aus Isocyanaten und Polyolen. Derartige Harzsysteme sind dem Fachmann bekannt, beispielsweise aus Penczek et al. (Advances in Polymer Science, 184, S. 1 - 95, 2005*),* Pham et al. (Ullmann's Encyclopedia of Industrial Chemistry, Vol. 13, 2012*),* Fahnler (Polyamide, Kunststoff Handbuch 3/4, 1998*)* und Younes (WO12134878 A2*).*

Es ist außerdem bevorzugt, dass die mindestens eine Schicht (S1) des Paneels zusätzlich mindestens ein faserförmiges Material enthält, wobei
i) das faserförmige Material Fasern in Form von einer oder mehreren Lagen aus Schnittfasern, Vliesen, Gelegen, Gestricken und/oder Geweben, bevorzugt in Form von Gelegen oder Geweben, besonders bevorzugt in Form von Gelegen oder Geweben mit einem Flächengewicht pro Gelege bzw. Gewebe von 150 bis 2500 g/m² enthält, und/oder
ii) das faserförmige Material Fasern aus organischen, anorganischen, metallischen oder keramischen Fasern, bevorzugt polymere Fasern, Basaltfasern, Glasfasern, Kohlenstofffasern oder Naturfasern, besonders bevorzugt Glasfasern oder Kohlenstofffasern enthält.

Für die Naturfasern und die polymeren Fasern gelten die zuvor beschriebenen Ausführungen.

Eine Schicht (S1), die zusätzlich mindestens ein faserförmiges Material enthält, wird auch als faserverstärkte Schicht, insbesondere als faserverstärkte Harzschicht, sofern die Schicht (S1) ein Harz umfasst, bezeichnet.

Erfindungsgemäß bevorzugt ist außerdem ein Paneel, bei dem zumindest eine der folgenden Optionen erfüllt ist:
i) der zweite Bereich (FB21) des ersten Teils (FT1) der Faser (F) und/oder der zweite Bereich (FB22) des zweiten Teils (FT2) der Faser (F) ist teilweise oder vollständig, vorzugsweise vollständig, mit der Schicht (S1) in Kontakt, und/oder
ii) das Paneel weist zwischen mindestens einer Seite des Formkörpers und mindestens einer Schicht (S1) mindestens eine Schicht (S2) auf, vorzugsweise ist die Schicht (S2) aus flächigen Fasermaterialien oder polymeren Folien, besonders bevorzugt aus Glasfasern oder Kohlenstofffasern in Form von Vliesen, Gelegen oder Geweben und/ oder,
iii) das Paneel weist zwei Schichten (S1) auf und die beiden Schichten (S1) sind jeweils an einer Seite des Formkörpers angebracht, die der jeweils anderen Seite des Formkörpers gegenüberliegt.

Weiterhin Gegenstand der vorliegenden Erfindung ist ein Verfahren zur Herstellung des erfindungsgemäßen Paneels, bei dem die mindestens eine Schicht (S1) als reaktives viskoses Harz auf einen erfindungsgemäßen Formkörper erzeugt, aufgebracht und ausgehärtet wird, vorzugsweise durch Flüssigimprägnierverfahren, besonders bevorzugt durch Druck- bzw. vakuumunterstützte Imprägnierverfahren, insbesondere bevorzugt durch Vakuuminfusion oder druckunterstützte Injektionsverfahren, am meisten bevorzugt durch Vakuuminfusion. Flüssigimprägnierverfahren sind dem Fachmann als solche bekannt und werden beispielsweise in Wiley Encyclopedia of Composites (2nd Edition, Wiley, 2012), Parnas et al. (Liquid Composite Moulding, Hanser, 2000) und Williams et al. (Composites Part A, 27, S. 517 - 524, 1997) ausführlich beschrieben.

Zur Herstellung des erfindungsgemäßen Paneels können verschiedene Hilfsmaterialien eingesetzt werden. Geeignete Hilfsmaterialien für die Herstellung durch Vakuuminfusion sind beispielsweise Vakuumfolie, bevorzugt aus Nylon, Vakuumdichtband, Fließhilfe, bevorzugt aus Nylon, Trennfolie, bevorzugt aus Polyolefin, Abreißgewebe, bevorzugt aus Polyester sowie eine semipermeable Folie, vorzugsweise eine Membranfolie, besonders bevorzugt eine PTFE Membranfolie und Absaugvlies, bevorzugt aus Polyester. Die Wahl geeigneter Hilfsmaterialien richtet sich nach dem zu fertigenden Bauteil, dem gewählten Prozess und den eingesetzten Materialien, speziell dem Harzsystem. Beim Einsatz von Harzsystemen auf der Basis von Epoxid und Polyurethan werden bevorzugt Fließhilfen aus Nylon, Trennfolien aus Polyolefin, Abreißgewebe aus Polyester sowie eine semipermeable Folien als PTFE-Membranfolien und Absaugvliese aus Polyester eingesetzt.

Diese Hilfsmaterialien können auf verschiedene Arten bei den Verfahren zur Herstellung des erfindungsgemäßen Paneels eingesetzt werden. Paneele werden besonders bevorzugt aus den Formkörpern durch Aufbringung faserverstärkter Decklagen mittels Vakuuminfusion hergestellt. In einem typischen Aufbau werden zur Herstellung des erfindungsgemäßen Paneels an der Ober- und Unterseite der Formkörper faserförmige Materialien und ggf. weitere Schichten aufgebracht. Anschließend werden Abreißgewebe und Trennfolien platziert. Bei der Infusion des flüssigen Harzsystems kann mit Fließhilfen und / oder Membranfolien gearbeitet werden. Besonders bevorzugt sind die folgenden Varianten:
i) Einsatz einer Fließhilfe auf nur einer Seite des Aufbaus, und/oder
ii) Einsatz einer Fließhilfe auf beiden Seiten des Aufbaus, und/oder
iii) Aufbau mit einer semipermeablen Membran (VAP-Aufbau), diese wird vorzugsweise flächig über den Formkörper drapiert, auf dem Fließhilfen, Trennfolie und Abreißgewebe auf einer oder beiden Seiten eingesetzt werden und die semipermeable Membran durch Vakuumdichtband zur Formoberfläche hin abgedichtet wird, das Absaugvlies wird auf der Formkörper fremden Seite der semipermeablen Membran eingesetzt wodurch die Luft flächig nach oben evakuiert wird, und/oder
iv) Verwendung einer Vakuumtasche aus Membranfolie, die bevorzugt auf die gegenüberliegende Anguss-Seite des Formkörpers platziert wird, womit die Luft von der gegenüberliegenden Seite zum Anguss evakuiert wird.

Der Aufbau wird anschließend mit Angüssen für das Harzsystem und Anschlüssen für die Evakuierung ausgestattet. Schließlich wird eine Vakuumfolie über den gesamten Aufbau aufgebracht, mit Dichtband abgedichtet und der gesamte Aufbau evakuiert. Nach der Infusion des Harzsystems findet unter Aufrechterhaltung des Vakuums die Reaktion des Harzsystems statt.

Gegenstand der vorliegenden Erfindung ist außerdem die Verwendung des erfindungsgemäßen Formkörpers oder des erfindungsgemäßen Paneels für Rotorblätter in Windenergieanlagen, im Transportsektor, im Bausektor, im Automobilbau, im Schiffsbau, im Schienenfahrzeugbau, für den Containerbau, für sanitäre Anlagen und/oder in der Luft- und Raumfahrt.

## Patentansprüche

1. Formkörper, umfassend einen Schaumstoff, der eine erste Seite und eine zweite Seite aufweist, und mindestens eine Faser, die einen ersten Teil, einen zweiten Teil und einen dritten Teil aufweist, wobei
- sich ein erster Bereich (4b1) des ersten Teils der Faser innerhalb des Formkörpers befindet und von dem Schaumstoff umschlossen ist und ein zweiter Bereich (4a1) des ersten Teils der Faser aus der ersten Seite des Schaumstoffs herausragt, und
- sich ein erster Bereich (4b2) des zweiten Teils der Faser innerhalb des Formkörpers befindet und von dem Schaumstoff umschlossen ist und ein zweiter Bereich (4a2) des zweiten Teils der Faser aus der ersten Seite des Schaumstoffs herausragt und
- der dritte Teil der Faser den ersten Teil und den zweiten Teil der Faser verbindet und auf der zweiten Seite des Schaumstoffs angeordnet ist, und
- der erste Bereich (4b1) des ersten Teils der Faser und der erste Bereich (4b2) des zweiten Teils der Faser sich nicht berühren, wobei der Formkörper erhältlich ist nach einem Verfahren umfassend die folgenden Schritte a) bis k):
a) Bereitstellen des Schaumstoffs,
b) Bereitstellen der Faser auf der zweiten Seite des Schaumstoffs,
c) Erzeugen von einem ersten Loch je Faser in dem Schaumstoff, wobei sich das erste Loch von der ersten Seite zur zweiten Seite des Schaumstoffs erstreckt,
d) Erzeugen von einem zweiten Loch je Faser in dem Schaumstoff, wobei sich das zweite Loch von der ersten Seite zur zweiten Seite des Schaumstoffs erstreckt,
e) Durchführen einer Nadel von der ersten Seite des Schaumstoffs durch das erste Loch zur zweiten Seite des Schaumstoffs,
f) Befestigen des ersten Teils der Faser an der Nadel auf der zweiten Seite des Schaumstoffs,
g) Rückführen der Nadel zusammen mit dem ersten Teil der Faser durch das erste Loch zur ersten Seite des Schaumstoffs,
h) Durchführen einer Nadel von der ersten Seite des Schaumstoffs durch das zweite Loch zur zweiten Seite des Schaumstoffs,
i) Befestigen des zweiten Teils der Faser an der Nadel auf der zweiten Seite des Schaumstoffs,
j) Rückführen der Nadel zusammen mit dem zweiten Teil der Faser durch das zweite Loch zur ersten Seite des Schaumstoffs und
k) Erhalt des Formkörpers.

2. Formkörper gemäß Anspruch 1, **dadurch gekennzeichnet, dass**
i) der erste Bereich (4b1) des ersten Teils der Faser parallel zum ersten Bereich (4b2) des zweiten Teils der Faser ausgerichtet ist, und/oder
ii) der dritte Teil der Faser parallel zur zweiten Seite des Schaumstoffs ausgerichtet ist, und/oder
iii) der dritte Teil der Faser mit der zweiten Seite des Schaumstoffs in Kontakt ist, und/oder
iv) der zweite Bereich (4a1) des ersten Teils der Faser schlaufenförmig ist, und/oder der zweite Bereich (4a2) des zweiten Teils der Faser schlaufenförmig ist, bevorzugt sind der zweite Bereich (4a1) des ersten Teils der Faser und der zweite Bereich (4a2) des zweiten Teils der Faser schlaufenförmig.

3. Formkörper gemäß Anspruch 1 oder 2, **dadurch gekennzeichnet, dass** der Schaumstoff aus einem Partikelschaumstoff, einem Extrusionsschaumstoff, einem Reaktivschaumstoff und/oder einem Batchschaumstoff hergestellt ist, vorzugsweise aus einem Extrusionsschaumstoff, insbesondere aus einem Extrusionsschaumstoff, der in einem Verfahren umfassend die folgenden Schritte hergestellt worden ist:
I) Bereitstellen einer Polymerschmelze in einem Extruder,
II) Einbringen von zumindest einem Treibmittel in die in Schritt I) bereitgestellte Polymerschmelze unter Erhalt einer schäumbaren Polymerschmelze,
III) Extrusion der in Schritt II) erhaltenen schäumbaren Polymerschmelze aus dem Extruder durch zumindest eine Düsenöffnung in einen Bereich niedrigeren Drucks, wobei die schäumbare Polymerschmelze expandiert unter Erhalt eines expandierten Schaums,
IV) Kalibrieren des expandierten Schaums aus Schritt III), indem der expandierte Schaum durch ein formgebendes Werkzeug durchgeführt wird, unter Erhalt des Extrusionsschaumstoffs,
V) gegebenenfalls spanende Bearbeitung des in Schritt IV) erhaltenen Extrusionsschaumstoffs,
wobei
i) die in Schritt I) bereitgestellte Polymerschmelze gegebenenfalls mindestens ein Additiv enthält, und/oder
ii) gegebenenfalls während Schritt II) zu der Polymerschmelze und/oder zwischen Schritt II) und Schritt III) zu der schäumbaren Polymerschmelze mindestens ein Additiv gegeben wird, und/oder
iii) gegebenenfalls während Schritt III) auf den expandierten Schaum und/oder während Schritt IV) auf den expandierten Schaum mindestens ein Additiv aufgebracht wird, und/oder
iv) gegebenenfalls während und/oder direkt im Anschluss an Schritt IV) auf den Extrusionsschaumstoff mindestens eine Schicht aufgebracht wird.

4. Formkörper gemäß einem der Ansprüche 1 bis 3, **dadurch gekennzeichnet, dass** der Schaumstoff auf Basis von mindestens einem Polymer ist, das ausgewählt ist aus Polystyrol, Polyester, Polyphenylenoxid, einem aus Phenylenoxid hergestellten Copolymer, einem aus Styrol hergestellten Copolymer, Polyarylethersulfon, Polyphenylensulfid, Polyaryletherketon, Polypropylen, Polyethylen, Polyamid, Polyamidimid, Polyetherimid, Polycarbonat, Polyacrylat, Polymilchsäure, Polyvinylchlorid, Polyurethan oder einem Gemisch davon, vorzugsweise ist das Polymer ausgewählt aus Polystyrol, Polyphenylenoxid, einem Gemisch aus Polystyrol und Polyphenylenoxid, Polyethylenterephthalat, Polycarbonat, Polyethersulfon, Polysulfon, Polyetherimid, einem aus Styrol hergestellten Copolymer, oder ein Gemisch aus aus Styrol hergestellten Copolymeren,
besonders bevorzugt ist das Polymer Polystyrol, ein Gemisch aus Polystyrol und Poly(2,6-dimethyl phenylenoxid), ein Gemisch aus einem Styrol-Maleinsäureanhydrid-Polymer und einem Styrol-Acrylnitril-Polymer oder ein Styrol-Maleinsäureanhyrid-Polymer (SMA),
vorzugsweise weist ein aus Styrol hergestelltes Copolymer als Comonomer zu Styrol ein Monomer auf, das ausgewählt ist aus α-Methylstyrol, kernhalogenierten Styrolen, kernalkylierten Styrolen, Acrylnitril, Acrylsäureester, Methacrylsäureester, N-Vinylverbindungen, Maleinsäureanhydrid, Butadien, Divinylbenzol oder Butandioldiacrylat.

5. Formkörper gemäß einem der Ansprüche 1 bis 4, **dadurch gekennzeichnet, dass**
i) der in Schritt a) bereitgestellte Schaumstoff auf der ersten Seite und/oder auf der zweiten Seite eine Schicht aufweist, wobei in Schritt c) das erste Loch je Faser zusätzlich in der Schicht erzeugt wird und in Schritt d) das zweite Loch je Faser zusätzlich in der Schicht erzeugt wird und in den Schritten e) und h) die Nadel zusätzlich durch die Schicht durchgeführt wird, und/oder
ii) die Schritte c) und e) gleichzeitig durchgeführt werden, und/oder die Schritte d) und h) gleichzeitig durchgeführt werden, bevorzugt werden die Schritte c), d), e) und h) gleichzeitig durchgeführt.

6. Formkörper gemäß einem der Ansprüche 1 bis 5, **dadurch gekennzeichnet, dass**
i) die Faser eine einzelne Faser oder ein Faserbündel, vorzugsweise ein Faserbündel ist, und/oder
ii) die Faser eine organische, anorganische, metallische, keramische Faser oder eine Kombination daraus ist, bevorzugt eine polymere Faser, Basaltfaser, Glasfaser, Kohlenstofffaser oder Naturfaser, insbesondere bevorzugt eine Polyaramidfaser, Glasfaser, Basaltfaser oder Kohlenstofffaser; eine polymere Faser ist vorzugsweise eine Faser aus Polyester, Polyamid, Polyaramid, Polyethylen, Polyurethan, Polyvinylchlorid, Polyimid und/oder Polyamidimid; eine Naturfaser ist vorzugsweise eine Faser aus Sisal, Hanf, Flachs, Bambus, Kokos und/oder Jute, und/oder
iii) die Faser in Schritt b) als Faserbündel bereitgestellt wird mit einer Anzahl von Einzelfasern pro Bündel von mindestens 10, bevorzugt 100 bis 100 000, besonders bevorzugt 300 bis 10 000 bei Glasfasern und 1 000 bis 50 000 bei Kohlenstofffasern, und insbesondere bevorzugt 500 bis 5 000 bei Glasfasern und 2 000 bis 20 000 bei Kohlenstofffasern, und/oder
iv) der erste Teil der Faser in einem Winkel α_{FT1} von 0 bis 60°, vorzugsweise von 0 bis 50°, mehr bevorzugt von 0 bis 15° oder von 10 bis 70 °, insbesondere von 30 bis 60 °, mehr bevorzugt von 30 bis 50°, noch mehr bevorzugt von 30 bis 45°, insbesondere von 45°, relativ zur Dickenrichtung (d) des Formkörpers in den Schaumstoff eingebracht ist, und/oder
v) der zweite Teil der Faser in einem Winkel α_{FT2} von 0 bis 60°, vorzugsweise von 0 bis 50°, mehr bevorzugt von 0 bis 15° oder von 10 bis 70 °, insbesondere von 30 bis 60 °, mehr bevorzugt von 30 bis 50°, noch mehr bevorzugt von 30 bis 45°, insbesondere von 45°, relativ zur Dickenrichtung (d) des Formkörpers in den Schaumstoff eingebracht ist, und/oder
vi) die erste Seite des Schaumstoffs der zweiten Seite des Schaumstoffs gegenüberliegt, und/oder

7. Verfahren zur Herstellung eines Formkörpers gemäß einem der Ansprüche 1 bis 6, umfassend die Schritte a) bis k):
a) Bereitstellen des Schaumstoffs,
b) Bereitstellen der Faser auf der zweiten Seite des Schaumstoffs,
c) Erzeugen von einem ersten Loch je Faser in dem Schaumstoff, wobei sich das erste Loch von der ersten Seite zur zweiten Seite des Schaumstoffs erstreckt,
d) Erzeugen von einem zweiten Loch je Faser in dem Schaumstoff, wobei sich das zweite Loch von der ersten Seite zur zweiten Seite des Schaumstoffs erstreckt,
e) Durchführen einer Nadel von der ersten Seite des Schaumstoffs durch das erste Loch zur zweiten Seite des Schaumstoffs,
f) Befestigen des ersten Teils der Faser an der Nadel auf der zweiten Seite des Schaumstoffs,
g) Rückführen der Nadel zusammen mit dem ersten Teil der Faser durch das erste Loch zur ersten Seite des Schaumstoffs,
h) Durchführen einer Nadel von der ersten Seite des Schaumstoffs durch das zweite Loch zur zweiten Seite des Schaumstoffs,
i) Befestigen des zweiten Teils der Faser an der Nadel auf der zweiten Seite des Schaumstoffs,
j) Rückführen der Nadel zusammen mit dem zweiten Teil der Faser durch das zweite Loch zur ersten Seite des Schaumstoffs und
k) Erhalt des Formkörpers.

8. Paneel umfassend mindestens einen Formkörper gemäß einem der Ansprüche 1 bis 6 und mindestens eine Schicht.

9. Paneel gemäß Anspruch 8, **dadurch gekennzeichnet, dass** die Schicht mindestens ein Harz umfasst, vorzugsweise ist das Harz ein reaktives duroplastisches oder thermoplastisches Harz, mehr bevorzugt ist das Harz auf der Basis von Epoxiden, Acrylaten, Polyurethanen, Polyamiden, Polyestern, ungesättigten Polyestern, Vinylestern oder Mischungen daraus, insbesondere ist das Harz ein aminisch härtendes Epoxidharz, ein latent härtendes Epoxidharz, ein anhydridisch härtendes Epoxidharz oder ein Polyurethan aus Isocyanaten und Polyolen.

10. Paneel gemäß Anspruch 8 oder 9, **dadurch gekennzeichnet, dass** die Schicht zusätzlich mindestens ein faserförmiges Material enthält, wobei
i) das faserförmige Material Fasern in Form von ein oder mehreren Lagen aus Schnittfasern, Vliesen, Gelegen, Gestricken und/oder Geweben, bevorzugt in Form von Gelegen oder Geweben, besonders bevorzugt in Form von Gelegen oder Geweben mit einem Flächengewicht pro Gelege bzw. Gewebe von 150 bis 2500 g/m² enthält, und/oder
ii) das faserförmige Material organische, anorganische, metallische oder keramische Fasern, bevorzugt polymere Fasern, Basaltfasern, Glasfasern, Kohlenstofffasern oder Naturfasern, besonders bevorzugt Glasfasern oder Kohlenstofffasern enthält.

11. Paneel gemäß einem der Ansprüche 8 bis 10, **dadurch gekennzeichnet, dass**
i) der zweite Bereich (4a1) des ersten Teils der Faser und/oder der zweite Bereich (4a2) des zweiten Teils der Faser teilweise oder vollständig, vorzugsweise vollständig, mit der Schicht in Kontakt ist, und/oder
ii) das Paneel zwischen mindestens einer Seite des Formkörpers und mindestens einer Schicht mindestens eine Schicht aufweist, vorzugsweise ist die Schicht aus flächigen Fasermaterialien oder polymeren Folien, besonders bevorzugt aus Glasfasern oder Kohlenstofffasern in Form von Vliesen, Gelegen oder Geweben, und/oder
iii) das Paneel zwei Schichten aufweist und die beiden Schichten jeweils an einer Seite des Formkörpers angebracht sind, die der jeweils anderen Seite im Formkörper gegenüberliegt.

12. Verfahren zur Herstellung eines Paneels gemäß einem der Ansprüche 8 bis 11, **dadurch gekennzeichnet, dass** die mindestens eine Schicht als reaktives, viskoses Harz auf einen Formkörper gemäß einem der Ansprüche 1 bis 6 erzeugt, aufgebracht und ausgehärtet wird, vorzugsweise durch Flüssigimprägnierverfahren, besonders bevorzugt durch druck- bzw. vakuumunterstützte Imprägnierverfahren, insbesondere bevorzugt durch Vakuuminfusion oder druckunterstützte Injektionsverfahren, am meisten bevorzugt durch Vakuuminfusion.

13. Verwendung eines Formkörpers gemäß einem der Ansprüche 1 bis 6, oder eines Paneels gemäß einem der Ansprüche 8 bis 11 für Rotorblätter in Windenergieanlagen, im Transportsektor, im Bausektor, im Automobilbau, im Schiffsbau, im Schienenfahrzeugbau, für den Containerbau, für sanitäre Anlagen und/oder in der Luft- und Raumfahrt.

## Claims

1. A molding comprising a foam which has a first side and a second side and at least one fiber which has a first part, a second part and a third part, wherein
- a first region (4b1) of the first part of the fiber is located inside the molding and surrounded by the foam and a second region (4a1) of the first part of the fiber projects from the first side of the foam and
- a first region (4b2) of the second part of the fiber is located inside the molding and surrounded by the foam and a second region (4a2) of the second part of the fiber projects from the first side of the foam and
- the third part of the fiber connects the first part and the second part of the fiber and is arranged on the second side of the foam and
- the first region (4b1) of the first part of the fiber and the first region (4b2) of the second part of the fiber are not in contact,
wherein the molding is obtainable by a process comprising the following steps a) to k):
a) providing the foam,
b) providing the fiber on the second side of the foam,
c) producing a first hole per fiber in the foam, wherein the first hole extends from the first side to the second side of the foam,
d) producing a second hole per fiber in the foam, wherein the second hole extends from the first side to the second side of the foam,
e) passing through a needle from the first side of the foam through the first hole to the second side of the foam,
f) securing the first part of the fiber to the needle on the second side of the foam,
g) returning the needle together with the first part of the fiber through the first hole to the first side of the foam,
h) passing through a needle from the first side of the foam through the second hole to the second side of the foam,
i) securing the second part of the fiber to the needle on the second side of the foam,
j) returning the needle together with the second part of the fiber through the second hole to the first side of the foam and
k) obtaining the molding.

2. The molding according to claim 1, wherein
i) the first region (4b1) of the first part of the fiber is aligned parallel to the first region (4b2) of the second part of the fiber and/or
ii) the third part of the fiber is aligned parallel to the second side of the foam and/or
iii) the third part of the fiber is in contact with to the second side of the foam and/or
iv) the second region (4a1) of the first part of the fiber is loop-shaped and/or the second region (4a2) of the second part of the fiber is loop-shaped, it being preferable when the second region (4a1) of the first part of the fiber and the second region (4a2) of the second part of the fiber are loop-shaped.

3. The molding according to claim 1 or 2, wherein the foam has been produced from a particle foam, an extruded foam, a reactive foam and/or a batch foam, preferably from an extruded foam, in particular from an extruded foam produced in a process comprising the following steps:
I) providing a polymer melt in an extruder,
II) introducing at least one blowing agent into the polymer melt provided in step I) to obtain a foamable polymer melt,
III) extruding the foamable polymer melt obtained in step II) from the extruder through at least one die aperture into an area at lower pressure, with expansion of the foamable polymer melt to obtain an expanded foam,
IV) calibrating the expanded foam from step III) by passing the expanded foam through a shaping tool to obtain the extruded foam,
V) optional material-removing processing of the extruded foam obtained in step IV),
wherein
i) the polymer melt provided in step I) optionally comprises at least one additive, and/or
ii) at least one additive is optionally added to the polymer melt during step II) and/or to the foamable polymer melt between step II) and step III), and/or
iii) at least one additive is optionally applied during step III) to the expanded foam and/or during step IV) to the expanded foam, and/or
iv) at least one layer is optionally applied to the extruded foam during and/or directly after step IV).

4. The molding according to any of claims 1 to 3, wherein the foam is based on at least one polymer selected from polystyrene, polyester, polyphenylene oxide, a copolymer produced from phenylene oxide, a copolymer produced from styrene, polyaryl ether sulfone, polyphenylene sulfide, polyaryl ether ketone, polypropylene, polyethylene, polyamide, polyamide imide, polyether imide, polycarbonate, polyacrylate, polylactic acid, polyvinyl chloride, polyurethane, or a mixture thereof,
the polymer preferably being selected from polystyrene, polyphenylene oxide, a mixture of polystyrene and polyphenylene oxide, polyethylene terephthalate, polycarbonate, polyether sulfone, polysulfone, polyether imide, a copolymer prepared from styrene, or a mixture of copolymers prepared from styrene,
the polymer particularly preferably being polystyrene, a mixture of polystyrene and poly(2,6-dimethylphenylene oxide), a mixture of a styrenemaleic anhydride polymer and a styrene-acrylonitrile polymer, or a styrenemaleic anhydride polymer (SMA),
a copolymer produced from styrene preferably having as a comonomer for styrene a monomer selected from α-methylstyrene, ring-halogenated styrenes, ring-alkylated styrenes, acrylonitrile, acrylic esters, methacrylic esters, N-vinyl compounds, maleic anhydride, butadiene, divinylbenzene and butanediol diacrylate.

5. The molding according to any of claims 1 to 4, wherein
i) the foam provided in step a) has a layer on the first side and/or on the second side, wherein in step c) the first hole per fiber is additionally produced in the layer and in step d) the second hole per fiber is additionally produced in the layer and in steps e) and h) the needle is additionally passed through the layer and/or
ii) the steps c) and e) are performed simultaneously and/or the steps d) and h) are performed simultaneously, it being preferable when the steps c), d), e) and h) are performed simultaneously.

6. The molding according to any of claims 1 to 5, wherein
i) the fiber is a single fiber or a fiber bundle, preferably a fiber bundle, and/or
ii) the fiber is an organic, inorganic, metallic or ceramic fiber or a combination thereof, preferably a polymeric fiber, basalt fiber, glass fiber, carbon fiber or natural fiber, especially preferably a polyaramid fiber, glass fiber, basalt fiber or carbon fiber; a polymeric fiber is preferably a fiber of polyester, polyamide, polyaramid, polyethylene, polyurethane, polyvinyl chloride, polyimide and/or polyamide imide; a natural fiber is preferably a fiber of sisal, hemp, flax, bamboo, coconut and/or jute, and/or
iii) the fiber in step b) is provided in the form of a fiber bundle having a number of individual fibers per bundle of at least 10, preferably 100 to 100 000, particularly preferably 300 to 10 000, in the case of glass fibers and 1000 to 50 000 in the case of carbon fibers and especially preferably 500 to 5000 in the case of glass fibers and 2000 to 20 000 in the case of carbon fibers, and/or
iv) the first part of the fiber has been introduced into the foam at an angle α_{FT1} of 0° to 60°, preferably of 0° to 50°, more preferably of 0° to 15° or of 10° to 70°, in particular of 30° to 60°, more preferably of 30° to 50°, yet more preferably of 30° to 45°, in particular of 45°, relative to the thickness direction (d) of the molding and/or
v) the second part of the fiber has been introduced into the foam at an angle α_{FT2} of 0° to 60°, preferably of 0° to 50°, more preferably of 0° to 15° or of 10° to 70°, in particular of 30° to 60°, more preferably of 30° to 50°, yet more preferably of 30° to 45°, in particular of 45°, relative to the thickness direction (d) of the molding and/or
vi) the first side of the foam is opposite the second side of the foam and/or

7. A process for the production of a molding according to any of claims 1 to 6, comprising the steps a) to k):
a) providing the foam,
b) providing the fiber on the second side of the foam,
c) producing a first hole per fiber in the foam, wherein the first hole extends from the first side to the second side of the foam,
d) producing a second hole per fiber in the foam, wherein the second hole extends from the first side to the second side of the foam,
e) passing through a needle from the first side of the foam through the first hole to the second side of the foam,
f) securing the first part of the fiber to the needle on the second side of the foam,
g) returning the needle together with the first part of the fiber through the first hole to the first side of the foam,
h) passing through a needle from the first side of the foam through the second hole to the second side of the foam,
i) securing the second part of the fiber to the needle on the second side of the foam,
j) returning the needle together with the second part of the fiber through the second hole to the first side of the foam and
k) obtaining the molding.

8. A panel comprising at least one molding according to any of claims 1 to 6 and at least one layer.

9. The panel according to claim 8, wherein the layer comprises at least one resin, the resin preferably being a reactive thermosetting or thermoplastic resin, the resin more preferably being based on epoxides, acrylates, polyurethanes, polyamides, polyesters, unsaturated polyesters, vinyl esters or mixtures thereof, the resin in particular being an amine-curing epoxy resin, a latent-curing epoxy resin, an anhydride-curing epoxy resin or a polyurethane composed of isocyanates and polyols.

10. The panel according to claim 8 or 9, wherein the layer additionally comprises at least one fibrous material, wherein
i) the fibrous material comprises fibers in the form of one or more plies of chopped fibers, nonwovens, non-crimp fabrics, knits and/or wovens, preferably in the form of non-crimp fabrics or wovens, particularly preferably in the form of non-crimp fabrics or wovens having a basis weight per non-crimp fabric/woven of 150 to 2500 g/m², and/or
ii) the fibrous material comprises organic, inorganic, metallic or ceramic fibers, preferably polymeric fibers, basalt fibers, glass fibers, carbon fibers or natural fibers, particularly preferably glass fibers or carbon fibers.

11. The panel according to any of claims 8 to 10, wherein
i) the second region (4a1) of the first part of the fiber and/or the second region (4a2) of the second part of the fiber is in partial or complete contact, preferably complete contact, with the layer and/or
ii) the panel comprises between at least one side of the molding and at least one layer at least one layer, the layer preferably being composed of sheetlike fiber materials or polymeric films, particularly preferably of glass fibers or carbon fibers in the form of nonwovens, non-crimp fabrics or wovens, and/or
iii) the panel comprises two layers and the two layers are each attached at a side of the molding that is opposite the respective other side of the molding.

12. A process for producing a panel according to any of claims 8 to 11, wherein the at least one layer is produced, applied and cured on a molding according to any of claims 1 to 6 in the form of a reactive viscous resin, preferably by liquid impregnation methods, particularly preferably by pressure- or vacuum-assisted impregnation methods, especially preferably by vacuum infusion or pressure-assisted injection methods, most preferably by vacuum infusion.

13. The use of a molding according to any of claims 1 to 6 or of a panel according to any of claims 8 to 11 for rotor blades in wind turbines, in the transport sector, in the construction sector, in automobile construction, in shipbuilding, in rail vehicle construction, for container construction, for sanitary installations and/or in aerospace.

## Revendications

1. Corps moulé, comprenant une mousse qui présente un premier côté et un deuxième côté, et au moins une fibre, qui présente une première partie, une deuxième partie et une troisième partie,
- une première zone (4b1) de la première partie de la fibre se trouvant à l'intérieur du corps moulé et étant entourée de la mousse et une deuxième zone (4a1) de la première partie de la fibre faisant saillie du premier côté de la mousse, et
- une première zone (4b2) de la deuxième partie de la fibre se trouvant à l'intérieur du corps moulé et étant entourée de la mousse et une deuxième zone (4a2) de la deuxième partie de la fibre faisant saillie du premier côté de la mousse et
- la troisième partie de la fibre reliant la première partie et la deuxième partie de la fibre et étant agencée sur le deuxième côté de la mousse, et
- la première zone (4b1) de la première partie de la fibre et la première zone (4b2) de la deuxième partie de la fibre ne se touchant pas, le corps moulé pouvant être obtenu par un procédé comprenant les étapes suivantes a) à k) :
a) mise à disposition de la mousse,
b) mise à disposition de la fibre sur le deuxième côté de la mousse,
c) production d'un premier trou par fibre dans la mousse, le premier trou s'étendant du premier côté jusqu'au deuxième côté de la mousse,
d) production d'un deuxième trou par fibre dans la mousse, le deuxième trou s'étendant du premier côté jusqu'au deuxième côté de la mousse,
e) passage d'une aiguille du premier côté de la mousse à travers le premier trou jusqu'au deuxième côté de la mousse,
f) fixation de la première partie de la fibre à l'aiguille sur le deuxième côté de la mousse,
g) renvoi de l'aiguille ensemble avec la première partie de la fibre à travers le premier trou jusqu'au premier côté de la mousse,
h) passage d'une aiguille du premier côté de la mousse à travers le deuxième trou jusqu'au deuxième côté de la mousse,
i) fixation de la deuxième partie de la fibre à l'aiguille sur le deuxième côté de la mousse,
j) renvoi de l'aiguille ensemble avec la deuxième partie de la fibre à travers le deuxième trou jusqu'au premier côté de la mousse et
k) obtention du corps moulé.

2. Corps moulé selon la revendication 1, **caractérisé en ce que**
i) la première zone (4b1) de la première partie de la fibre est orientée parallèlement à la première zone (4b2) de la deuxième partie de la fibre, et/ou
ii) la troisième partie de la fibre est orientée parallèlement au deuxième côté de la mousse, et/ou
iii) la troisième partie de la fibre est en contact avec le deuxième côté de la mousse, et/ou
iv) la deuxième zone (4a1) de la première partie de la fibre est en forme de boucle, et/ou la deuxième zone (4a2) de la deuxième partie de la fibre est en forme de boucle, préférablement la deuxième zone (4a1) de la première partie de la fibre et la deuxième zone (4a2) de la deuxième partie de la fibre sont en forme de boucle.

3. Corps moulé selon la revendication 1 ou 2, **caractérisé en ce que** la mousse est préparée à partir d'une mousse particulaire, d'une mousse d'extrusion, d'une mousse réactive et/ou d'une mousse en lot, de préférence à partir d'une mousse d'extrusion, en particulier à partir d'une mousse d'extrusion qui a été préparée dans un procédé comprenant les étapes suivantes :
I) mise à disposition d'une masse fondue de polymère dans une extrudeuse,
II) introduction d'au moins un agent propulseur dans la masse fondue de polymère mise à disposition dans l'étape I) avec obtention d'une masse fondue de polymère moussable,
III) extrusion de la masse fondue de polymère moussable obtenue dans l'étape II) à partir de l'extrudeuse à travers au moins une ouverture de buse dans une zone à pression réduite, la masse fondue de polymère moussable s'expansant avec obtention d'une mousse expansée,
IV) calibration de la mousse expansée de l'étape III) par le fait que la mousse expansée est passée à travers un outil façonnant, avec obtention de la mousse d'extrusion,
V) éventuellement, usinage par enlèvement de copeaux de la mousse d'extrusion obtenue dans l'étape IV),
dans lequel
i) la masse fondue de polymère mise à disposition dans l'étape I) contient éventuellement au moins un additif, et/ou
ii) éventuellement, au moins un additif est ajouté pendant l'étape II) à la masse fondue de polymère et/ou entre l'étape II) et l'étape III) à la masse fondue de polymère moussable, et/ou
iii) éventuellement, au moins un additif est appliqué pendant l'étape III) sur la mousse expansée et/ou pendant l'étape IV) sur la mousse expansée, et/ou
iv) éventuellement, au moins une couche est appliquée pendant et/ou directement à la suite de l'étape IV) sur la mousse d'extrusion.

4. Corps moulé selon l'une quelconque des revendications 1 à 3, **caractérisé en ce que** la mousse est à base d'au moins un polymère, qui est choisi parmi un polystyrène, un polyester, un poly(oxyde de phénylène), un copolymère préparé à partir d'oxyde de phénylène, un copolymère préparé à partir de styrène, une polyaryléthersulfone, un poly(sulfure de phénylène), une polyaryléthercétone, un polypropylène, un polyéthylène, un polyamide, un polyamidimide, un polyétherimide, un polycarbonate, un polyacrylate, un poly(acide lactique), un poly(chlorure de vinyle), un polyuréthane et un mélange correspondant,
de préférence le polymère est choisi parmi un polystyrène, un poly(oxyde de phénylène), un mélange de polystyrène et de poly(oxyde de phénylène), un poly(téréphtalate d'éthylène), un polycarbonate, une polyéthersulfone, une polysulfone, un polyétherimide, un copolymère préparé à partir de styrène et un mélange de copolymères préparés à partir de styrène,
particulièrement préférablement le polymère est un polystyrène, un mélange de polystyrène et de poly(oxyde de 2,6-diméthylphénylène), un mélange d'un polymère styrène-anhydride maléique et d'un polymère styrène-acrylonitrile ou un polymère styrène-anhydride maléique (SMA), de préférence un copolymère préparé à partir de styrène présente, en tant que comonomère avec le styrène, un monomère qui est choisi parmi l'α-méthylstyrène, des styrènes halogénés sur le cycle, des styrènes alkylés sur le cycle, l'acrylonitrile, un ester d'acide acrylique, un ester d'acide méthacrylique, des composés N-vinyliques, l'anhydride maléique, le butadiène, le divinylbenzène et le diacrylate de butanediol.

5. Corps moulé selon l'une quelconque des revendications 1 à 4, **caractérisé en ce que**
i) la mousse mise à disposition dans l'étape a) présente une couche sur le premier côté et/ou sur le deuxième côté, où dans l'étape c) le premier trou par fibre est produit de plus dans la couche et dans l'étape d) le deuxième trou par fibre est produit de plus dans la couche et dans les étapes e) et h) l'aiguille est passée de plus à travers la couche, et/ou
ii) les étapes c) et e) sont mises en œuvre simultanément, et/ou les étapes d) et h) sont mises en œuvre simultanément, préférablement les étapes c), d), e) et h) sont mises en œuvre simultanément.

6. Corps moulé selon l'une quelconque des revendications 1 à 5, **caractérisé en ce que**
i) la fibre est une fibre individuelle ou un paquet de fibres, de préférence est un paquet de fibres, et/ou
ii) la fibre est une fibre organique, inorganique, métallique, céramique ou une combinaison de celles-ci, préférablement une fibre polymère, une fibre de basalte, une fibre de verre, une fibre de carbone ou une fibre naturelle, en particulier préférablement une fibre de polyaramide, une fibre de verre, une fibre de basalte ou une fibre de carbone ; une fibre polymère est de préférence une fibre de polyester, de polyamide, de polyaramide, de polyéthylène, de polyuréthane, de poly(chlorure de vinyle), de polyimide et/ou de polyamidimide ; une fibre naturelle est de préférence une fibre de sisal, de chanvre, de lin, de bambou, de coco et/ou de jute, et/ou
iii) la fibre dans l'étape b) est mise à disposition en tant que paquet de fibres doté d'un nombre de fibres individuelles par paquet d'au moins 10, préférablement de 100 à 100 000, particulièrement préférablement de 300 à 10 000 dans le cas des fibres de verre et de 1 000 à 50 000 dans le cas des fibres de carbone, et en particulier préférablement de 500 à 5 000 dans le cas des fibres de verre et de 2 000 à 20 000 dans le cas des fibres de carbone, et/ou
iv) la première partie de la fibre est appliquée dans la mousse suivant un angle α_{FT1}, de 0 à 60°, de préférence de 0 à 50°, plus préférablement de 0 à 15° ou de 10 à 70°, en particulier de 30 à 60°, plus préférablement de 30 à 50°, encore plus préférablement de 30 à 45°, en particulier de 45°, par rapport au sens de l'épaisseur (d) du corps moulé, et/ou
v) la deuxième partie de la fibre est appliquée dans la mousse suivant un angle α_{FT2} de 0 à 60°, de préférence de 0 à 50°, plus préférablement de 0 à 15° ou de 10 à 70°, en particulier de 30 à 60°, plus préférablement de 30 à 50°, encore plus préférablement de 30 à 45°, en particulier de 45°, par rapport au sens de l'épaisseur (d) du corps moulé, et/ou
vi) le premier côté de la mousse fait face au deuxième côté de la mousse, et/ou

7. Procédé pour la préparation d'un corps moulé selon l'une quelconque des revendications 1 à 6, comprenant les étapes a) à k) :
a) mise à disposition de la mousse,
b) mise à disposition de la fibre sur le deuxième côté de la mousse,
c) production d'un premier trou par fibre dans la mousse, le premier trou s'étendant du premier côté jusqu'au deuxième côté de la mousse,
d) production d'un deuxième trou par fibre dans la mousse, le deuxième trou s'étendant du premier côté jusqu'au deuxième côté de la mousse,
e) passage d'une aiguille du premier côté de la mousse à travers le premier trou jusqu'au deuxième côté de la mousse,
f) fixation de la première partie de la fibre à l'aiguille sur le deuxième côté de la mousse,
g) renvoi de l'aiguille ensemble avec la première partie de la fibre à travers le premier trou jusqu'au premier côté de la mousse,
h) passage d'une aiguille du premier côté de la mousse à travers le deuxième trou jusqu'au deuxième côté de la mousse,
i) fixation de la deuxième partie de la fibre à l'aiguille sur le deuxième côté de la mousse,
j) renvoi de l'aiguille ensemble avec la deuxième partie de la fibre à travers le deuxième trou jusqu'au premier côté de la mousse et
k) obtention du corps moulé.

8. Panneau comprenant au moins un corps moulé selon l'une quelconque des revendications 1 à 6 et au moins une couche.

9. Panneau selon la revendication 8, **caractérisé en ce que** la couche comprend au moins une résine, de préférence la résine est une résine duroplastique ou thermoplastique réactive, plus préférablement la résine est à base d'époxydes, d'acrylates, de polyuréthanes, de polyamides, de polyesters, de polyesters insaturés, des esters de vinyle et de mélanges correspondants, en particulier la résine est une résine époxy durcissant avec une amine, une résine époxy durcissant de manière latente, une résine époxy durcissant avec un anhydride ou un polyuréthane composé d'isocyanates et de polyols.

10. Panneau selon la revendication 8 ou 9, **caractérisé en ce que** la couche contient de plus au moins un matériau fibreux,
i) le matériau fibreux contenant des fibres sous la forme d'une ou plusieurs couches de fibres coupées, de nappes, de canevas, de tricots et/ou de tissus, préférablement sous forme de canevas ou de tissus, particulièrement préférablement sous forme de canevas ou de tissus dotés d'un poids surfacique par canevas respectivement tissu de 150 à 2500 g/m², et/ou
ii) le matériau fibreux contenant des fibres organiques, inorganiques, métalliques ou céramiques, préférablement des fibres polymères, des fibres de basalte, des fibres de verre, des fibres de carbone ou des fibres naturelles, particulièrement préférablement des fibres de verre ou des fibres de carbone.

11. Panneau selon l'une quelconque des revendications 8 à 10, **caractérisé en ce que**
i) la deuxième zone (4a1) de la première partie de la fibre et/ou la deuxième zone (4a2) de la deuxième partie de la fibre est partiellement ou totalement, de préférence totalement en contact avec la couche, et/ou
ii) le panneau présente au moins une couche entre au moins un côté du corps moulé et au moins une couche, de préférence la couche est composée de matériaux fibreux à plat ou de feuilles polymères, particulièrement préférablement de fibres de verre ou de fibres de carbone sous forme de nappes, de canevas ou de tissus, et/ou
iii) le panneau présente deux couches et les deux couches sont appliquées à chaque fois au niveau d'un côté du corps moulé, qui fait face à chaque fois à l'autre côté dans le corps moulé.

12. Procédé pour la préparation d'un panneau selon l'une quelconque des revendications 8 à 11, **caractérisé en ce que** l'au moins une couche est produite, appliquée et durcie en tant que résine réactive visqueuse sur un corps moulé selon l'une quelconque des revendications 1 à 6, de préférence par un procédé d'imprégnation liquide, particulièrement préférablement par un procédé d'imprégnation assisté par une pression ou par le vide, en particulier préférablement par infusion sous vide ou par un procédé d'injection assisté par une pression, le plus préférablement par infusion sous vide.

13. Utilisation d'un corps moulé selon l'une quelconque des revendications 1 à 6 ou d'un panneau selon l'une quelconque des revendications 8 à 11 pour des pales de rotor dans des installations éoliennes, dans le secteur des transports, dans le secteur de la construction, dans la construction automobile, dans la construction navale, dans la construction de véhicule ferroviaire, pour la construction de conteneurs, pour des installations sanitaires et/ou dans l'aéronautique et l'aérospatiale.
